(19) Europäisches Patentamt
European Patent Office
Office européen des brevets

(11) **EP 4 424 740 A1**

(12) **EUROPEAN PATENT APPLICATION**
published in accordance with Art. 153(4) EPC

(43) Date of publication:
**04.09.2024 Bulletin 2024/36**

(21) Application number: **22886538.2**

(22) Date of filing: **22.09.2022**

(51) International Patent Classification (IPC):
***C08G 59/06** (2006.01)* ***C08G 61/02** (2006.01)*
***C08J 5/24** (2006.01)*

(52) Cooperative Patent Classification (CPC):
**C08G 59/06; C08G 61/02; C08J 5/24**

(86) International application number:
**PCT/JP2022/035297**

(87) International publication number:
**WO 2023/074205 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.10.2021 JP 2021175834**

(71) Applicant: **DIC Corporation**
**Tokyo 174-8520 (JP)**

(72) Inventors:
- **ONDA Shinji**
  **Ichihara-shi, Chiba 290-8585 (JP)**
- **MORINAGA Kunihiro**
  **Ichihara-shi, Chiba 290-8585 (JP)**

(74) Representative: **TBK**
**Bavariaring 4-6**
**80336 München (DE)**

(54) **PHENOLIC RESIN, EPOXY RESIN, CURABLE RESIN COMPOSITION, CURED OBJECT, FIBER-REINFORCED COMPOSITE MATERIAL, AND MOLDED FIBER-REINFORCED RESIN ARTICLE**

(57) To provide a phenolic resin having a particular structure used for obtaining an epoxy resin with low viscosity and excellent handleability, the epoxy resin from which a cured product having heat resistance and high bending properties (bending strength, bending elastic modulus, bending strain, etc.) can be obtained, a curable resin composition containing the epoxy resin, a cured product, a fiber-reinforced composite material, and a fiber-reinforced resin molded article that are obtained from the curable resin composition. The phenolic resin is a reaction product of a phenolic compound and an orthoxylylene skeleton-containing compound and has a phenolic skeleton derived from the phenolic compound and an orthoxylylene skeleton derived from the orthoxylylene skeleton-containing compound.

FIG. 1

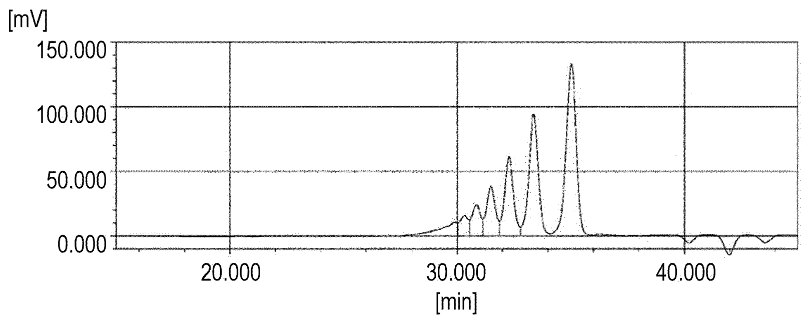


EP 4 424 740 A1

## Description

### Technical Field

The present invention relates to a phenolic resin having a particular structure, an epoxy resin obtained by using the phenolic resin, a curable resin composition containing the epoxy resin, and a cured product, a fiber-reinforced composite material, and a fiber-reinforced resin molded article that are obtained from the curable resin composition.

### Background Art

An epoxy resin is a curable resin that intramolecularly contains epoxy groups and that can be cured by forming a crosslinking network through these epoxy groups.
A curable resin composition that contains the epoxy resin and its curing agent as essential components gives a cured product that has excellent mechanical strength, heat resistance, water resistance, chemical resistance, insulating properties, etc., and thus has found a wide range of applications, including matrixes for fiber-reinforced composite materials, heat releasing members, coating solutions, semiconductors, and printed wiring substrates.
In particular, fiber-reinforced resin molded articles reinforced by reinforcing fibers and featuring excellent mechanical strength despite lightweight have drawn much attention, and have been increasingly applied to various structural usages including chassis and various parts of automobiles, airplanes, and ships; especially, since carbon fiber-reinforced plastics (CFRPs) have been increasingly applied in the airplane and automobile fields, the amount of epoxy resins used as the matrix resin therefor has increased steadily.
Examples of the epoxy resins presently mainly used in carbon fiber-reinforced plastics include diglycidyl ethers of bisphenol A and tetraglycidylamine of diaminodiphenylmethane (TGDDM) (for example, see PTL 1). These epoxy resins satisfy, to a particular level, the required properties for the carbon fiber-reinforced plastics, such as elastic modulus, strength, heat resistance, and moist heat resistance.
However, presently, the market has shown significant needs for yet higher elastic modulus, strength, and heat resistance, and the physical properties of the aforementioned epoxy resins do not sufficiently satisfy the needs of the market.
Particularly, in an attempt to increase the elastic modulus as a property of cured products obtained by using the aforementioned epoxy resins, the heat resistance, strength, and elongation (strain) of the cured products are generally degraded, and it is difficult under these circumstances to simultaneously satisfy high elastic modulus and other physical properties.

### Citation List

#### Patent Literature

PTL 1: Japanese Unexamined Patent Application Publication No. 2003-201388

### Summary of Invention

#### Technical Problem

The technical problem addressed by the present invention is to provide a phenolic resin having a particular structure used for obtaining an epoxy resin with low viscosity and excellent handleability, the epoxy resin from which a cured product having heat resistance and high bending properties (bending strength, bending elastic modulus, bending strain, etc.) can be obtained, a curable resin composition containing the epoxy resin, and a cured product, a fiber-reinforced composite material, and a fiber-reinforced resin molded article obtained from the curable resin composition.

#### Solution to Problem

The inventors of the present invention have conducted extensive studies to address the problem described above and thus have found that a cured product obtained by using a curable resin composition that contains an epoxy resin that is obtained by using a phenolic resin having a particular structure and that has low viscosity and excellent handleability exhibits heat resistance and high bending properties, thereby completing the present invention.
The present invention relates to a phenolic resin that is a reaction product of a phenolic compound and an orthoxylylene skeleton-containing compound and that has a phenolic skeleton derived from the phenolic compound and an orthoxylylene skeleton derived from the orthoxylylene skeleton-containing compound.

The phenolic resin according to the present invention is preferably represented by general formula (1) below.

[Chem. 1]

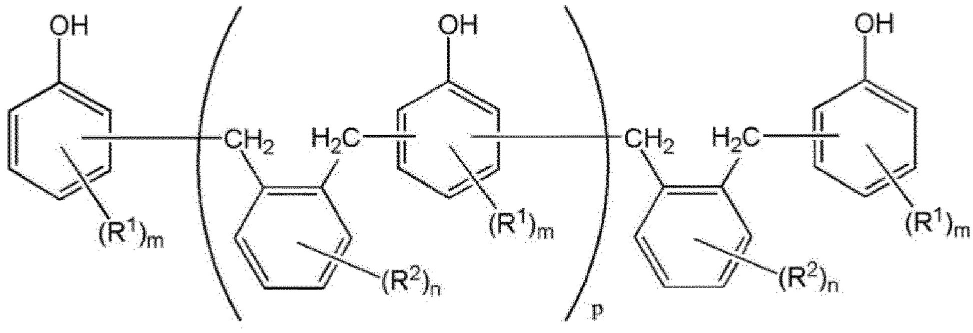

(1)

(In formula (1), $R^1$ represents a hydrogen atom, a hydrocarbon group having 1 to 4 carbon atoms, or an alkoxy group having 1 to 4 carbon atoms, $R^2$ represents a hydrogen atom or a methyl group, m represents an integer of 0 to 3, n represents an integer of 0 to 4, and p represents an integer of 0 to 50.)

The present invention relates to an epoxy resin which is a reaction product that has glycidyl ether groups formed by reaction between phenolic hydroxyl groups of the phenolic resin and epihalohydrin.

The epoxy resin of the present invention is preferably represented by general formula (2) below.

[Chem. 2]

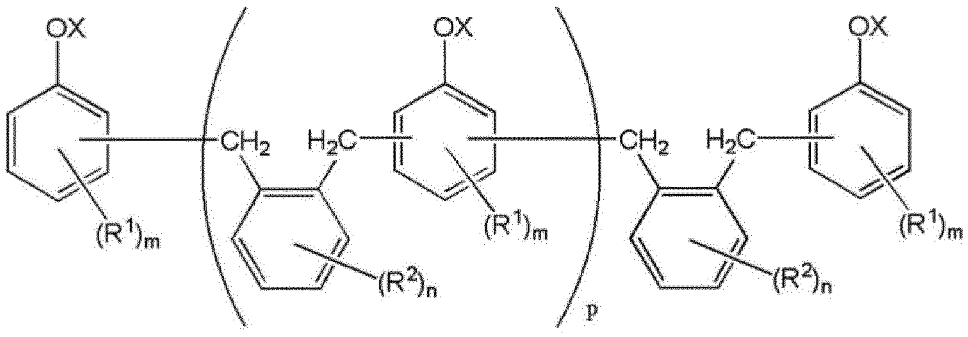

(2)

[Chem. 3]

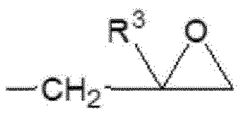

(3)

(In formula (2), X is represented by formula (3), $R^1$ represents a hydrogen atom, a hydrocarbon group having 1 to 4 carbon atoms, or an alkoxy group having 1 to 4 carbon atoms, $R^2$ represents a hydrogen atom or a methyl group, $R^3$ represents a hydrogen atom or a methyl group, m represents an integer of 0 to 3, n represents an integer of 0 to 4, and p represents an integer of 0 to 50.)

The epoxy resin of the present invention preferably has an epoxy equivalent of 200 to 300 g/eq.

The epoxy resin of the present invention preferably has a melt viscosity at 150°C of 2.0 dPa.s or less.

The present invention relates to a curable resin composition containing the epoxy resin.

The present invention relates to a cured product obtained by curing the curable resin composition.

The present invention relates to a fiber-reinforced composite material containing the curable resin composition

and reinforcing fibers.

The present invention relates to a fiber-reinforced resin molded article containing the cured product and reinforcing fibers.

## Advantageous Effects of Invention

According to the present invention, a cured product obtained by using an epoxy resin obtained by using a phenolic resin having a particular structure can exhibit heat resistance and high bending properties (bending strength, bending elastic modulus, bending strain, etc.) and is highly useful.

## Description of Embodiments

### [Phenolic resin]

The present invention relates to a phenolic resin that is a reaction product of a phenolic compound and an orthoxylylene skeleton-containing compound and that has a phenolic skeleton derived from the phenolic compound and an orthoxylylene skeleton derived from the orthoxylylene skeleton-containing compound.

This phenolic resin, which contains a phenolic skeleton (the aromatic ring having one hydroxyl group as a substituent) derived from the phenolic compound, is polyfunctional and is preferable since a cured product obtained therefrom exhibits heat resistance.

In addition, since the phenolic resin contains an orthoxylylene skeleton derived from the orthoxylylene skeleton-containing compound, the phenolic resin has a bent structure and narrower intermolecular gaps, and presumably thus a cured product obtained by using an epoxy resin obtained by using the phenolic resin can exhibit high elastic modulus. This is also preferable because the intermolecular interaction is appropriately weakened, and thus the phenolic resin exhibits low melt viscosity and excellent handleability.

Note that the "phenolic resin" refers to a resin that contains at least phenolic hydroxyl groups.

The "phenolic skeleton" refers to a skeleton formed by removing, from the "skeleton that has an aromatic ring having one hydroxyl group as a substituent", one hydrogen atom constituting the hydroxyl group.

Furthermore, the "orthoxylylene skeleton" refers to a skeleton that links compounds at least containing phenolic hydroxyl groups contained in the phenolic resin to each other and that has two methylene groups ortho to each other as substituents on an aromatic ring.

### [Phenolic compound]

The phenolic resin is a reaction product of a phenolic compound and an orthoxylylene skeleton-containing compound. This phenolic compound is hydroxybenzene having one hydroxyl group, and the aromatic ring of this phenolic compound may be free of substituents but contains only hydrogen atoms or may have, as substituents instead of the hydrogen atoms, hydrocarbon groups having 1 to 4 carbon atoms or an alkoxy groups having 1 to 4 carbon atoms. These substituents may be alkyl groups such as methyl groups and tert-butyl groups. It is advantageous to use this phenolic compound since a phenolic skeleton is incorporated (introduced) into the phenolic resin and the phenolic resin becomes polyfunctional, and thus the cured product obtained therefrom exhibits heat resistance.

When alkyl groups such as methyl groups are contained as the substituents, the positions and number of substituents thereof are not particularly limited; however, to obtain a cured product having excellent mechanical properties, heat resistance, and hydrophobicity, the phenolic compound may contain one methyl group, tert-butyl group, or ethyl group, but most preferably contains no substituents but only hydrogen atoms (phenol) from the viewpoint of bending properties. In addition, the presence of alkyl groups having great steric hindrance as the alkyl groups contributes to improving the water absorption resistance, and, in particular, ortho-cresol, para-cresol, para-tert-butylphenol, etc., can be used. Note that when alkyl groups are contained as the substituents, the number of carbon atoms therein is preferably 1 to 4. The number of carbon atoms is preferably not more than 4 since the intermolecular gaps widen and the mechanical strength of the obtained cured product is degraded.

The phenolic compounds described above may be used alone or multiple compounds with differently positioned alkyl groups, such as methyl groups, may be used in combination.

### [Orthoxylylene skeleton-containing compound]

The phenolic resin is a reaction product of a phenolic compound and an orthoxylylene skeleton-containing compound. The phenolic resin preferably includes (introduction) an orthoxylylene skeleton derived from the orthoxylylene skeleton-containing compound since the intermolecular interaction is appropriately weakened, and thus the phenolic

resin exhibits low melt viscosity and excellent handleability. Moreover, the use of orthoxylylene skeleton is preferable since the orthoxylylene skeleton decreases the distance between molecules of the phenolic compound and decreases the distance between the functional groups in the obtained phenolic resin, and thus a cured product having excellent mechanical strength and heat resistance can be obtained.

Furthermore, presumably, when the orthoxylylene skeleton-containing compound is used in synthesizing the phenolic resin, the molecular structure becomes bent and the free volume decreases during network formation (polymerization) during production of the cured product compared to when a paraxylylene compound or the like is used, and the elastic modulus increases as a result. In other words, formation of a bent structure is useful since it narrows the intermolecular gaps, increases density and hardness, enables high strength and high elastic modulus which are otherwise conflicting properties, and increases both the elastic modulus and the strength.

Furthermore, presumably, the phenolic resin can exhibit high bending properties due to the combination of the effect of narrowing the intramolecular gaps by inclusion (introduction) of the phenolic skeleton and the effect of narrowing the intramolecular gaps by inclusion (introduction) of the orthoxylylene skeleton.

Examples of the orthoxylylene skeleton-containing compound include orthoxylylene dichloride, orthoxylylene dibromide, orthoxylylene dimethoxide, orthoxylylene diethoxide, and orthoxylylene glycol. Among these, orthoxylylene dichloride and the like are preferable from the viewpoint of availability.

These orthoxylylene skeleton-containing compounds may be used alone or multiple compounds may be used in combination.

The phenolic resin according to the present invention is preferably represented by general formula (1) below.

[Chem. 4]

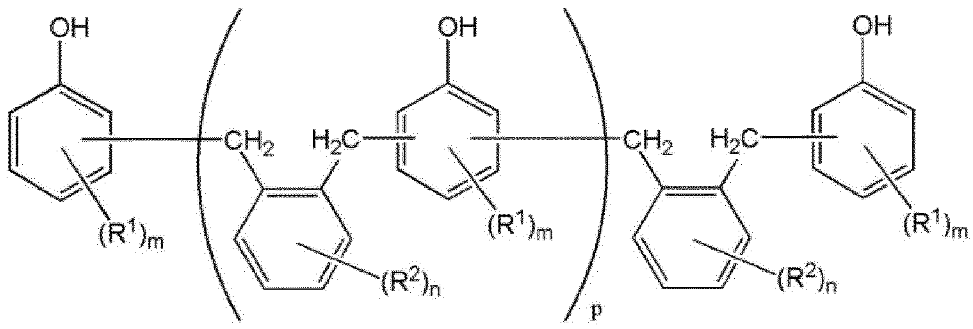

(1)

(In formula (1), $R^1$ represents a hydrogen atom, a hydrocarbon group having 1 to 4 carbon atoms, or an alkoxy group having 1 to 4 carbon atoms, $R^2$ represents a hydrogen atom or a methyl group, m represents an integer of 0 to 3, n represents an integer of 0 to 4, and p represents an integer of 0 to 50.)

The phenolic resin represented by general formula (1) above can be obtained as a phenolic resin containing a phenolic resin represented by general formula (1) below by, for example, reacting a phenolic compound represented by general formula (A) below and an orthoxylylene skeleton-containing compound (hereinafter a halogenated (chlorinated) orthoxylylene skeleton-containing compound is described as an example) represented by general formula (B) below.

[Chem. 5]

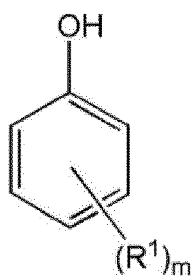

(A)

[Chem. 6]

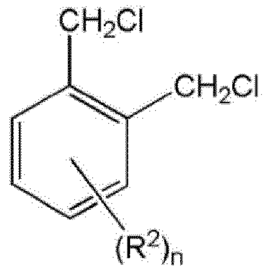

(B)

[Chem. 7]

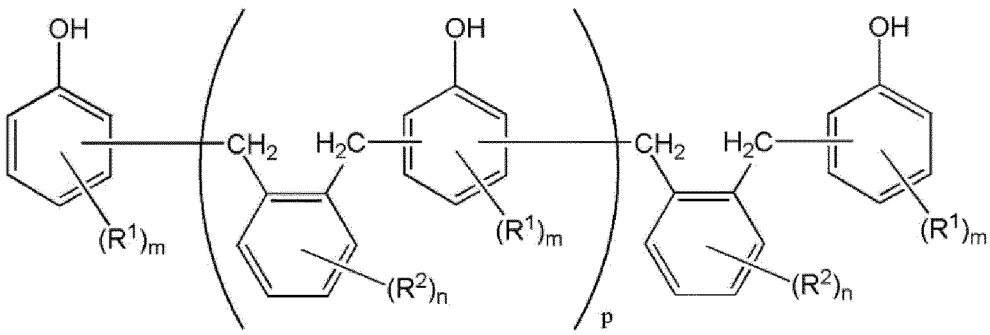

(1)

In general formula (A) above, the substituent $R^1$ may be a hydrogen atom, a hydrocarbon group having 1 to 4 carbon atoms, or an alkoxy group having 1 to 4 carbon atoms, and, from the viewpoints of the reactivity as a raw material and the bending properties of a cured product, preferable examples of the hydrocarbon group having 1 to 4 carbon atoms include alkyl groups such as a methyl group, an ethyl group, a propyl group, a butyl group, and t-butyl group. Examples of the alkoxy group having 1 to 4 carbon atoms include a methoxy group, an ethoxy group, a propyloxy group, and a butoxy group. In particular, an embodiment in which $R^1$ is a hydrogen atom is preferable due to low melt viscosity, excellent handleability, and excellent balance between bending properties and heat resistance.

In general formula (A) above, m represents an integer of 0 to 3, and preferably represents an integer of 0 to 2 from the viewpoints of the reactivity as a raw material and bending properties of the cured product.

In general formula (B) above, $R^2$ preferably each independently represent a hydrogen atom or a methyl group, and more preferably each independently represent a hydrogen atom from the viewpoints of the heat resistance and the bending properties of the cured product. $R^2$ is preferably a hydrogen atom or the like since the heat resistance and bending properties of the cured product strike an appropriate balance, and, in particular, $R^2$ preferably represents a hydrogen atom since bending properties are improved.

In general formula (B) above, n represents an integer of 0 to 4, and preferably represents an integer of 0 to 1 from the viewpoints of the reactivity as a raw material and bending properties of the cured product.

In general formula (1) above, p represents an integer of 0 to 50, and preferably represents an integer of 0 to 20 from the viewpoints of improving the bending properties of the cured product. Note that when p is 0, the phenolic resin has a dimer structure.

The detailed descriptions of $R^1$, $R^2$, m, and n in general formula (1) above are the same as those for general formulae (A) and (B) above.

As for the reaction ratio of the orthoxylylene skeleton-containing compound to the phenolic compound, 0.01 to 0.7 mol and more preferably 0.05 to 0.5 mol of the orthoxylylene skeleton-containing compound is preferably contained per mole of the phenolic compound since an epoxy resin having excellent balance between the melt viscosity and the heat resistance of the cured product is obtained.

The reaction between the phenolic compound and the orthoxylylene skeleton-containing compound is preferably performed in the presence of an acid catalysis to efficiently carry out the reaction; however, when orthoxylylene dichloride or the like is used as the orthoxylylene skeleton-containing compound, the reaction proceeds sufficiently in the absence of an acid catalysis, and there is no need to use a catalyst in such a case. Examples of the acid catalyst include inorganic acids such as hydrochloric acid, sulfuric acid, and phosphoric acid, organic acids such as methanesulfonic acid, paratoluenesulfonic acid, and oxalic acid, and Lewis acids such as boron trifluoride, anhydrous aluminum chloride, and zinc chloride. Here, the amount of the acid catalyst used is preferably in the range of 0.01 to 5 mass% relative to the total mass of the reaction raw materials.

The reaction between the phenolic compound and the orthoxylylene skeleton-containing compound (here, a chlorinated orthoxylylene skeleton-containing compound is used) is typically carried out under a temperature condition of 50 to 180°C, and hydrochloric gas generated during the reaction is preferably released out of the system as soon as possible, and neutralized and detoxicated by using alkaline water or the like. The reaction time is until hydrochloric gas is substantially no longer generated, the raw material orthoxylylene skeleton-containing compound has vanished, and the chlorine component derived from the orthoxylylene skeleton-containing compound is no longer detected; and the reaction time is typically about 1 to 50 hours although this depends on the reaction temperature. The reaction may be carried out in an organic solvent if necessary. The organic solvent used here may be any organic solvent that can be used under the aforementioned temperature condition, and specific examples thereof include methanol, ethanol, isopropanol, n-butanol, methyl cellosolve, ethyl cellosolve, butyl cellosolve, 1-methoxy-2-propanol, diglyme, diethylene glycol, diethylene glycol monomethyl ether, diethylene glycol monoethyl ether, toluene, xylene, and methyl isobutyl ketone. When these organic solvents are used, the amount thereof is preferably within the range of 5 to 500 mass% relative to the total mass of the reaction raw materials.

After termination of the reaction between the phenolic compound and the orthoxylylene skeleton-containing compound, the unreacted reaction raw materials, the solvent, etc., are distilled away to obtain the phenolic resin.

When some of the phenolic compound described above remains unreacted after termination of the reaction between the phenolic compound and the orthoxylylene skeleton-containing compound, the remaining phenolic compound evaporates during, for example, production of the cured product and may thereby cause voids and adversely affect the bending properties of the resulting epoxy resin; thus, the amount of the remaining phenolic compound is preferably small. The content ratio of the remaining (unreacted) phenolic compound calculated by GPC measurement is preferably 1 area% or less, more preferably 0.5 area% or less, and yet more preferably 0.2 area% or less in terms of GPC area%. Here, the GPC area% refers to a value obtained by dividing the GPC peak area value of the remaining (unreacted) phenolic compound by the total of the GPC peak area values of all components.

The hydroxyl equivalent of the phenolic resin is preferably 120 to 250 g/Eq, more preferably 130 to 220 g/Eq, and yet more preferably 140 to 200 g/Eq. The hydroxyl equivalent is preferably within the aforementioned range since the cured product obtained strikes excellent balance between the heat resistance and mechanical strength. Here, the hydroxyl equivalent of the phenolic resin is based on the measurement method of the "Hydroxyl equivalent of phenolic resin" in Examples described below.

The melt viscosity (150°C) of the phenolic resin is preferably 4.0 dPa·s or less, more preferably 3.0 dPa·s or less, and yet more preferably 0.1 to 2.0 dPa·s. The melt viscosity of the phenolic resin is preferably within the aforementioned range since low viscosity, excellent flowability, and excellent handleability are obtained, and thus, the epoxy resin synthesized by using the phenolic resin as a raw material exhibits low viscosity and excellent handleability during the production of a cured product. Here, the melt viscosity (150°C) is measured in accordance with ASTM D4287 by using an ICI viscometer.

The softening point of the phenolic resin is preferably 30 to 100°C and more preferably 40 to 80°C. The softening point of the phenolic resin is preferably within the aforementioned range since the handleability and the storage stability are improved. Here, the softening point is measured according to JIS K 7234 (ring-and-ball method).

<Epoxy resin>

The present invention relates to an epoxy resin that is a reaction product having glycidyl ether groups formed by reaction between phenolic hydroxyl groups of the phenolic resin and epihalohydrin, and that is represented by general formula (2) below.

[Chem. 8]

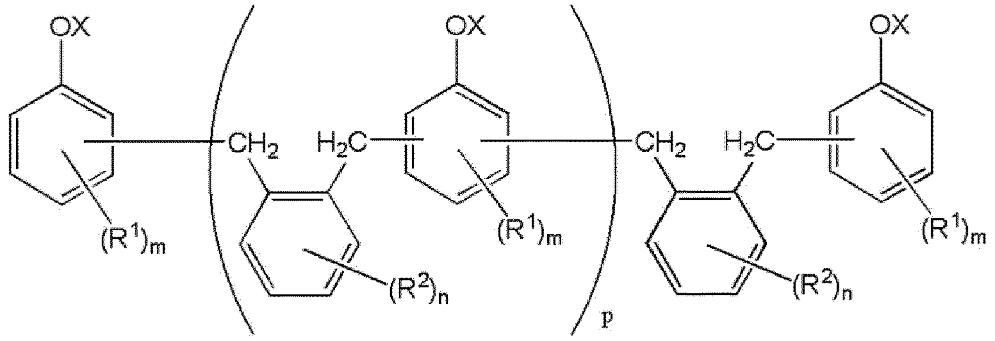

(2)

[Chem. 9]

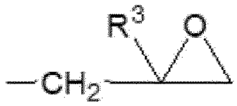

(3)

X in general formula (2) above is represented by formula (3), and the detailed description of $R^1$, $R^2$, m, n, and p are the same as those for general formula (1) above.

In general formula (3) above, $R^3$ preferably represents a hydrogen atom or a methyl group and more preferably represents a hydrogen atom. The hydrogen atom or the like is useful since the curing reaction with the curing agent proceeds smoothly.

The epoxy resin includes glycidyl ether groups introduced therein by the reaction between the phenolic hydroxyl groups in the phenolic resin and epihalohydrin, and a cured product obtained by using the epoxy resin is preferable due to its excellent heat resistance and high bending properties (bending strength, bending elastic modulus, bending strain, etc.).

Note that the "epoxy resin" refers to a resin that contains a compound containing at least glycidyl ether groups.

The target epoxy resin can be obtained by reaction between the phenolic resin and the epihalohydrin, and an example of the reaction involves using 2 to 10 mol of epihalohydrin per equivalent of phenolic hydroxyl groups in the phenolic resin and carrying out the reaction at a temperature of 20 to 120°C for 0.5 to 10 hours while adding 0.9 to 2.0 mol of a basic catalyst all at once or in fractions per equivalent of phenolic hydroxyl groups.

It should be noted that, in the industrial production, epihalohydrin used in the charge for the initial batch of epoxy resin production is entirely new; however, from the next batch and onwards, epihalohydrin recovered from the crude reaction products and new epihalohydrin corresponding to the amount consumed by the reaction are preferably used in combination. Here, epihalohydrin used is not particularly limited, and examples thereof include epichlorohydrin, epibromohydrin, and β-methylepichlorohydrin. Among these, epichlorohydrin is preferable due to its high industrial availability.

Specific examples of the basic catalyst include alkaline earth metal hydroxides, alkali metal carbonates, and alkali metal hydroxides. Among these, alkali metal hydroxides are preferable for their excellent catalytic activity, and, specifically, sodium hydroxide, potassium hydroxide, etc., are preferable.

After termination of the reaction, the reaction mixture is washed with water and distilled under heating at a reduced pressure to distill away the unreacted epihalohydrin and the organic solvent. In order to obtain an epoxy resin containing even less hydrolyzable halogens, the obtained epoxy resin may again be dissolved in an organic solvent, and additional reaction may be carried out by adding thereto an aqueous solution of an alkali metal hydroxide such as potassium hydroxide. During this process, to improve the reaction rate, a phase transfer catalyst such as quaternary ammonium salts and crown ethers may be present. The amount of the phase transfer catalyst if used any is preferably 0.1 to 3.0 parts by mass relative to 100 parts by mass of the epoxy resin. After termination of the reaction, the generated salts are removed by filtration, washing with water, or the like, and the organic solvent is distilled away under heating at a reduced pressure so that a target epoxy resin of the present invention can be obtained.

The epoxy equivalent of the epoxy resin is preferably 200 to 300 g/Eq, more preferably 210 to 280 g/Eq, and

yet more preferably 220 to 260 g/Eq. The epoxy equivalent of the epoxy resin is preferably within the aforementioned range since the cured product obtained therefrom exhibits an increased crosslinking density and excellent heat resistance. Here, the epoxy equivalent is measured according to JIS K 7236.

The melt viscosity (150°C) of the epoxy resin is preferably 2.0 dPa·s or less, more preferably 1.5 dPa·s or less, and yet more preferably 1.0 dPa·s or less. The melt viscosity of the epoxy resin is preferably within the aforementioned range since low viscosity, excellent flowability, and excellent handleability are obtained, and thus, the cured product obtained therefrom exhibits excellent moldability. Here, the melt viscosity (150°C) is measured in accordance with ASTM D4287 by using an ICI viscometer.

The softening point of the epoxy resin is preferably 30 to 100°C and more preferably 40 to 80°C. The softening point of the epoxy resin is preferably within the aforementioned range since the handleability and the storage stability are improved. Here, the softening point is measured according to JIS K 7234 (ring-and-ball method).

<Curable resin composition>

The present invention relates to a curable resin composition containing the epoxy resin. The curable resin composition, which contains the aforementioned epoxy resin, exhibits low viscosity and excellent handleability, and a cured product obtained therefrom is useful due to its heat resistance and high bending properties (bending strength, bending elastic modulus, etc.).

The curable resin composition of the present invention may further contain, in addition to the epoxy resin, other resins (including other epoxy resins), a curing agent, additives, solvents, etc., as long as the effects of the present invention are not impaired.

[Other epoxy resins]

Various epoxy resins can be used as other epoxy resins, and examples thereof include naphthalene skeleton-containing epoxy resins such as 2,7-diglycidyloxynaphthalene, α-naphthol novolac type epoxy resins, β-naphthol novolac type epoxy resins, α-naphthol/β-naphthol cocondensation type novolac polyglycidyl ethers, naphthol aralkyl type epoxy resins, and 1,1-bis(2,7-diglycidyloxy-1-naphthyl)alkanes; bisphenol type epoxy resins such as bisphenol A type epoxy resins and bisphenol F type epoxy resins; biphenyl type epoxy resins such as biphenyl type epoxy resins and tetramethylbiphenyl type epoxy resins; Novolac type epoxy resins such as phenol novolac type epoxy resins, cresol novolac type epoxy resins, bisphenol A novolac type epoxy resins, and biphenyl novolac type epoxy resins; tetraphenylethane type epoxy resins; dicyclopentadiene-phenol addition reaction type epoxy resins; phenol aralkyl type epoxy resins; and phosphorus atom-containing epoxy resins. Examples of the phosphorus atom-containing epoxy resins include epoxidized products of 9,10-dihydro-9-oxa-10-phosphaphenanthrene-10-oxide (hereinafter, "HCA" in short), epoxidized products of phenolic resins obtained by reacting HCA with quinones, epoxy resins obtained by modifying phenol novolac type epoxy resins with HCA, epoxy resins obtained by modifying cresol novolac type epoxy resins with HCA, and epoxy resins obtained by modifying bisphenol A type epoxy resins with phenolic resins obtained by reacting HCA and quinones. These may be used alone or in combination.

[Other resins]

The curable resin composition of the present invention may further contain, in addition to the epoxy resin and other epoxy resins described above, other resins. In this description, "other resins" refer to resins other than epoxy resins.

Specific examples of other resins are not particularly limited and include active esters, maleimide resins, bismaleimide resins, polymaleimide resins, polyphenylene ether resins, polyimide resins, cyanate ester resins, benzoxazine resins, triazine-containing cresol novolac resins, cyanate ester resins, styrene-maleic anhydride resins, allyl-group containing resins such as diallyl bisphenol and triallyl isocyanurate, polyphosphate esters, and phosphate ester-carbonate copolymers. These other resins may be used alone or in combination.

[Curing agent]

The epoxy resin composition of the present invention can contain a curing agent in addition to the epoxy resin described above. By containing the curing agent, a cured product having excellent heat resistance can be obtained.

Examples of the curing agent used here include amine compounds, amide compounds, acid anhydrides, and phenolic resins, which may be used alone or in combination. Here, the phenolic resins represented by general formula (1) above can also be used as the phenolic resin serving as a curing agent.

Examples of the amine compounds include diaminodiphenylmethane, diethylenetriamine, triethylenetetramine, diaminodiphenylsulfone, isophoronediamine, imidazole, $BF_3$-amine complexes, and guanidine derivatives.

Examples of the amide compounds include dicyanamide and polyamide resins synthesized from an amine such as ethylenediamine, and an aliphatic dibasic acid, a dimer acid, or a carboxylic acid compound of a fatty acid.

Examples of the acid anhydride include phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, and methylhexahydrophthalic anhydride.

Examples of the phenolic resin include phenol novolac resins, cresol novolac resins, aromatic hydrocarbon formaldehyde resin-modified phenolic resins, dicyclopentadiene phenol addition type resins, phenol aralkyl resins (ZYLOCK resin), polyhydric phenol novolac resins synthesized from formaldehyde and polyhydric hydroxy compounds such as resorcinol novolac resins, naphthol aralkyl resins, trimethylolmethane resins, tetraphenylolethane resins, naphthol novolac resins, naphthol-phenol co-condensed novolac resins, naphthol-cresol co-condensed novolac resins, biphenyl-modified phenolic resins (polyhydric phenol compounds in which phenol nuclei are bonded to biphenyl skeletons via bismethylene groups), and polyhydric phenol compounds such as aminotriazine-modified phenolic resins (polyhydric phenol compounds in which phenol nuclei are bonded with melamine, benzoguanamine, etc.) and alkoxy group-containing aromatic ring-modified novolac resins (polyhydric phenol compounds in which phenol nuclei and alkoxy group-containing aromatic rings are bonded via formaldehyde).

These curing agents may be used alone or in combination.

In the curable resin composition of the present invention, the blend ratio between the epoxy resin component and the curing agent is preferably such that 0.7 to 1.5 Eq of active groups in the curing agent are contained per equivalent of the total (epoxy equivalent) of epoxy groups in the epoxy resin component since the curable resin composition exhibits excellent curability and a cured product obtained therefrom exhibits excellent heat resistance and toughness.

Examples of additives include various additives such as a curing accelerator, a flame retardant, an inorganic filler, a silane coupling agent, a releasing agent, a pigment, an emulsifier, and a solvent, and these additives can be contained in the curable resin composition if necessary.

[Curing accelerator]

Examples of the curing accelerator include phosphorus compounds, tertiary amines, imidazole, organic acid metal salts, Lewis acids, and amine complex salts. In particular, from the viewpoint of excellence in curability, heat resistance, electrical characteristics, moisture resistance reliability, etc., 2-ethyl-4-methylimidazole is preferable as the imidazole compound, triphenylphosphine is preferable as the phosphorus compound, and 1,8-diazabicyclo-[5.4.0]-undecene (DBU) is preferable as the tertiary amine.

[Flame retardant]

Examples of the flame retardant include inorganic phosphorus compounds such as red phosphorus, ammonium phosphates such as monoammonium phosphate, diammonium phosphate, triammonium phosphate, and ammonium polyphosphate, and phosphoric acid amide; organic phosphorus compounds such as phosphoric acid ester compounds, phosphonic acid compounds, phosphinic acid compounds, phosphine oxide compounds, phosphorane compounds, organic nitrogen-containing phosphorus compounds, cyclic organic phosphorus compounds such as 9,10-dihydro-9-oxa-10-phosphaphenanthrene-10-oxide, 10-(2,5-dihydroxyphenyl)-10H-9-oxa-10-phosphaphenanthrene-10-oxide, and 10-(2,7-dihydroxynaphthyl)-10H-9-oxa-10-phosphaphenanthrene-10-oxide, and derivatives obtained by reacting the cyclic organic phosphorus compounds with compounds such as epoxy resins and phenolic resins; nitrogen flame retardants such as triazine compounds, cyanuric acid compounds, isocyanuric acid compounds, and phenothiazine; silicone flame retardants such as silicone oil, silicone rubber, and silicone resins; and inorganic flame retardants such as metal hydroxides, metal oxides, metal carbonate compounds, metal powders, boron compounds, and low-melting-point glass. When these flame retardants are used, the amount thereof is preferably within the range of 0.1 to 20 mass% in the curable resin composition.

[Inorganic filler]

The inorganic filler is, for example, blended when the curable resin composition of the present invention is used in the semiconductor sealing material. Examples of the inorganic filler include fused silica, crystalline silica, alumina, silicon nitride, and aluminum hydroxide. Among these, fused silica is preferable since a larger amount of the inorganic filler can be blended. The fused silica may be crushed or spherical, but spherical fused silica is preferably mainly used in order to increase the blend amount of the fused silica and reduce the increase in melt viscosity of the curable resin composition. Furthermore, in order to increase the blend amount of the spherical silica, the particle size distribution of the spherical silica is preferably adjusted appropriately. The fill ratio thereof is preferably within the range of 0.5 to 95 parts by mass in 100 parts by mass of the curable resin composition.

The curable resin composition of the present invention may be prepared without any solvent or may contain a solvent. The solvent has, for example, a function of adjusting the viscosity of the curable resin composition. Specific examples of the solvent are not particularly limited and include ketone solvents such as acetone, methyl ethyl ketone, methyl isobutyl ketone, and cyclohexanone; ether solvents such as diethyl ether and tetrahydrofuran; ester solvents such as ethyl acetate, butyl acetate, cellosolve acetate, propylene glycol monomethyl ether acetate, and carbitol acetate; cellosolve, carbitols such as butyl carbitol, aromatic hydrocarbons such as toluene, xylene, ethylbenzene, mesitylene, 1,2,3-trimethylbenzene, and 1,2,4-trimethylbenzene, and amide solvents such as dimethylformamide, dimethylacetamide, and N-methylpyrrolidone. These solvents may be used alone or in combination.

In addition, when the curable resin composition of the present invention is used in a conductive paste or the like, a conductive filler such as a silver powder and a copper powder can be used.

<Cured product>

The present invention relates to a cured product obtained by curing the curable resin composition. Since the cured product is obtained from the curable resin composition containing the epoxy resin, heat resistance and high bending properties (bending strength, bending elastic modulus, bending strain, etc.) can be exhibited, which is preferable.

The curable resin composition of the present invention is obtained by homogeneously mixing the aforementioned components. A cured product can be easily obtained by using a mixture of an epoxy resin component, a curing agent, and, if necessary, a curing accelerator, etc., by the same method as those known in the art. Examples of the obtained cured product include molded cured products such as a laminate, a cast product, an adhesive layer, a coating film, and a film.

In the method for obtaining the cured product by curing the curable resin composition, for example, the heating temperature during thermal curing is not particularly limited and is preferably 100 to 300°C, and the heating time is preferably 1 to 24 hours.

<Usage of curable resin composition>

Examples of the usage of the curable resin composition include printed wiring board materials, resin compositions for flexible wiring substrates, interlayer insulating materials for build-up substrates, insulating materials for circuit boards such as adhesive films for build up, resin cast materials, adhesives, semiconductor sealing materials, semiconductor devices, prepregs, conductive pastes, build-up films, build-up substrates, fiber-reinforced composite materials, and molded articles obtained by curing the composite materials. Among these various usages, for usages such as the printed circuit board materials, insulating materials for circuit boards, and adhesive films for build up, the composition can be used as insulating materials for substrates having built-in electronic components, that is, substrates having passive components such as capacitors and active components such as IC chips embedded therein. To utilize excellent properties of the cured product, such as heat resistance and high elastic modulus, the curable resin composition of the present invention is preferably used in semiconductor sealing materials, semiconductor devices, prepregs, flexible wiring substrates, circuit boards, build-up films, build-up substrates, multilayer printed circuit boards, fiber-reinforced composite materials, and molded articles prepared by curing the composite materials. In the description below, methods for producing the fiber-reinforced composite materials etc., from the curable resin composition are described.

1. Semiconductor sealing material

An example of the method for obtaining a semiconductor sealing material from the curable resin composition described above involves thoroughly melting and mixing the curable resin composition, a curing accelerator, and a blending agent such as an inorganic filler by using a kneader, rolls, etc., as necessary until the mixture is homogeneous. Here, fused silica is typically used as the inorganic filler; however, for the use in a highly heat-conductive semiconductor sealing material for power transistors and power ICs, crystalline silica having higher heat conductivity than fused silica, alumina, or silicon nitride may be used with a high fill ratio, or a fused silica, crystalline silica, alumina, a silicon nitride, etc., may be used. The fill ratio thereof is preferably such that the 30 to 95 parts by mass of the inorganic filler is used per 100 parts by mass of the curable resin composition, and, in particular, to improve flame retardancy, moisture resistance, and solder cracking resistance and to decrease the linear expansion coefficient, the fill ratio is preferably 70 parts by mass or more and more preferably 80 parts by mass or more.

2. Semiconductor device

An example of the method for obtaining a semiconductor device from the curable resin composition involves molding the semiconductor sealing material described above by casting or by using a transfer molding machine, an

injection molding machine, or the like, and then heating the material at 50 to 200°C for 2 to 10 hours.

3. Prepreg

An example of the method for obtaining a prepreg from the curable resin composition involves mixing an organic solvent described below and the curable resin composition to prepare a varnish, impregnating a reinforcing substrate (paper, glass cloth, glass nonwoven cloth, aramid paper, aramid cloth, glass mat, glass roving cloth, etc.) with the varnish, and heating the impregnated reinforcing substrate at a heating temperature, preferably 50 to 170°C, suitable for the solvent type used. The mass ratio between the resin composition and the reinforcing material used in this method is not particularly limited, but, typically, the mass ratio is adjusted such that the resin content in the prepreg is 20 to 60 mass%.

Examples of the organic solvent used here include methyl ethyl ketone, acetone, dimethylformamide, methyl isobutyl ketone, methoxypropanol, cyclohexanone, methyl cellosolve, ethyl diglycol acetate, propylene and glycol monomethyl ether acetate, and the selection and the appropriate amount of use can be appropriately selected according to the usage; for example, as described below, when a printed circuit board is further produced from the prepreg, a polar solvent having a boiling point of 160°C or lower, such as methyl ethyl ketone, acetone, or dimethylformamide, is preferably used in such an amount that the nonvolatile content is 40 to 80 mass%.

4. Circuit board

An example of the method for obtaining a printed circuit board from the curable resin composition involves stacking the prepregs by a common method with copper foils as appropriate, and performing thermal press bonding under a pressure of 1 to 10 MPa at 170 to 300°C for 10 minutes to 3 hours.

5. Flexible wiring substrate

An example of the method for producing a flexible wiring substrate from the curable resin composition involves three steps described below. In a first step, curable resin composition containing an active ester, an epoxy resin, an organic solvent is applied to an electrically insulating film by using a coating machine such as a reverse roll coater or a comma coater, in a second step, the electrically insulating film having the curable resin composition applied thereto is heated with a heater at 60 to 170°C for 1 to 15 minutes to cause the solvent to evaporate from the electrically insulating film, thereby B-staging the curable resin composition, and in a third step, a metal foil is thermally press-bonded onto the electrically insulating film, which has the B-staged curable resin composition applied thereto, with an adhesive by using a heating roll or the like (the press bonding pressure is preferably 2 to 200 N/cm and the press bonding temperature is preferably 40 to 200°C). If sufficient bonding performance is obtained through the aforementioned three steps, the process may end here; however, if complete bonding performance is necessary, post curing is preferably further conducted at 100 to 200°C for 1 to 24 hours. The thickness of the curable resin composition film after final curing is preferably in the range of 5 to 100 μm.

6. Build-up substrate

An example of the method for producing a build-up substrate from the curable resin composition involves three steps described below. In a first step, the curable resin composition in which rubber, a filler, etc., are appropriately blended is applied by a spray coating method, a curtain coating method, or the like, to a circuit board having circuits formed therein and cured; in a second step, holes such as particular through holes are formed as necessary, the resulting circuit board is treated with a roughening agent, and the surface thereof is rinsed with warm water to produce irregularities and plated with metal such as copper; and in a third step, the foregoing operations are repeated sequentially as necessary to alternately build-up resin insulating layers and conductor layers having particular circuit patterns. Here, the through holes are preferably formed after formation of the outermost resin insulating layer. The first step may be carried out by, instead of the solution application described above, a method that involves laminating build-up films that have been formed into a desired thickness and dried in advance. Alternatively, the build-up substrate of the present invention can be produced by thermally press-bonding a resin-clad copper foil, which is constituted by a copper foil and the resin composition in a semi-cured state thereon, onto a wiring substrate having circuits formed therein at 170 to 250°C so that a build-up substrate can be produced by omitting the steps of forming the roughened surface and plating.

7. Build-up film

An example of the method for producing a build-up film from the curable resin composition involves applying the curable resin composition to a support film to form a curable resin composition layer so that the resulting product

can be used as an adhesive film for a multilayer printed circuit board.

When a build-up film is formed from a curable resin composition, it is critical that this film soften under a lamination temperature condition (typically, 70 to 140°C) of a vacuum lamination method and exhibit flowability (resin flow) that enables the resin to fill the via holes and through holes in the circuit board at the same time as achieving lamination of the circuit board, and it is preferable to blend the aforementioned individual components so that such properties are exhibited.

Here, typically, through holes in a multilayer printed circuit board have a diameter of 0.1 to 0.5 mm and a depth of 0.1 to 1.2 mm, and typically the resin is preferably capable of filling the through holes in these ranges. When both surfaces of a circuit board are to be laminated, through holes are preferably filled to about 1/2.

The method for producing the aforementioned adhesive film can specifically involve preparing a varnish of the curable resin composition, then applying the varnish composition to a surface of a support film (Y), and drying the organic solvent by heating or blowing hot air or the like to form a composition layer (X) composed of the curable resin composition.

The thickness of the composition layer (X) formed is typically preferably equal to or more than the thickness of a conductor layer. The thickness of a conductor layer in a circuit board is typically in the range of 5 to 70 um, and thus the thickness of the resin composition layer is preferably 10 to 100 μm.

The composition layer (X) of the present invention may be protected by a protection film described below. Protection offered by the protection film can prevent adhesion of foreign matter to and scratches in the surface of the resin composition layer.

Examples of the support film and the protection film include polyolefins such as polyethylene, propylene, and polyvinyl chloride, polyesters such as polyethylene terephthalate (hereinafter may also be referred to as "PET") and polyethylene naphthalate, polycarbonates, polyimides, releasing paper, and metal foils such as copper foils and aluminum foils. The support film and the protection film may be subjected to a MAD process, a corona process, or a releasing process.

The thickness of the support film is not particularly limited but is typically 10 to 150 um and is preferably in the range of 25 to 50 um. The thickness of the protection film is preferably 1 to 40 μm.

The support film (Y) described above is removed after the film is laminated with a circuit board or after forming an insulating layer by thermal curing. Adhesion of foreign matter etc., during the curing step can be prevented by removing the support film (Y) after the adhesive film is thermally cured. If removal is to take place after curing, the support film is usually subjected to a releasing process in advance.

8. Multilayer printed circuit board

A multilayer printed circuit board can also be produced by using the films obtained as described above. An example of the method for producing such a multilayer printed circuit board involves removing the protection film if the composition layer (X) is protected by the protection film, and then laminating the composition layer (X) directly with one or both surfaces of a circuit board by, for example, a vacuum lamination method. The lamination method may be a batch method or a continuous method that uses rolls. Prior to the lamination, the adhesive film and the circuit board may be heated (preheated) as necessary.

Preferable lamination conditions are a press bonding temperature (lamination temperature) of 70 to 140°C, a press-bonding pressure of 1 to 11 kgf/cm$^2$ ($9.8 \times 10^4$ to $107.9 \times 10^4$ N/m$^2$), and a reduced pressure of an air pressure of 20 mmHg (26.7 hPa) or lower.

9. Fiber-reinforced composite material

The present invention relates to a fiber-reinforced composite material containing the curable resin composition and reinforcing fibers. A fiber-reinforced composite material can be produced from the curable resin composition by preparing a varnish by homogeneously mixing individual components constituting the curable resin composition, impregnating a reinforcing substrate composed of reinforcing fibers with the varnish, and performing polymerization. In particular, since the epoxy resin of the present invention has low melt viscosity and excellent handleability, the epoxy resin is suitable for producing the fiber-reinforced composite material.

The curing temperature during the polymerization is specifically preferably in the temperature range of 50 to 250°C, and, in particular, curing is preferably performed at 50 to 100°C to produce a tack-free cured product and then the tack-free cured product is preferably treated under a temperature condition of 120 to 200°C.

Here, the reinforcing fibers may be twisted yarn, untwisted yarn, or non-twisted yarn, but untwisted yarn and non-twisted yarn are preferable since the fiber-reinforced plastic member exhibits both moldability and mechanical strength. Furthermore, as for the form of the reinforcing fibers, the fibers may be oriented in one direction or may be used as a woven cloth. Woven cloth may be freely selected from plain weave, satin weave, etc., depending on the parts to be used and the usage. Specific examples thereof include carbon fibers, glass fibers, aramid fibers, boron fibers, alumina fibers, and silicon carbide fibers since these have excellent mechanical strength and durability, and these fibers

may be used in combination. Among these, carbon fibers are particularly preferable since carbon fibers give a molded article having excellent strength, and examples of such carbon fibers include polyacrylonitrile, pitch, and rayon fibers. Of these, polyacrylonitrile fibers are preferable since high-strength carbon fibers can be easily obtained. Here, the amount of the reinforcing fibers used in forming a fiber-reinforced composite material by impregnating a reinforcing substrate composed of reinforcing fibers with the varnish is preferably such that the reinforcing fiber volume content in the fiber-reinforced composite material is in the range of 40 to 85%.

10. Fiber-reinforced resin molded article

The present invention relates to a fiber-reinforced resin molded article containing the cured product and reinforcing fibers. Examples of the method for producing a fiber-reinforced resin molded article from the curable resin composition include a hand lay up method or spray up method that involves laying fiber aggregates in a mold and stacking the varnish thereon; a vacuum bag method that involves using a female or male mold to stack up the substrates composed of reinforcing fibers while infusing a varnish, putting a flexible mold, with which pressure can be applied to the molded article, over the resulting stack to provide a hermetic seal, and vacuum (reduced pressure)-molding the resulting product; an SMC pressing method that involves compression-molding sheets of a varnish preliminarily containing reinforcing fibers by using a die; and a method that involves producing prepregs obtained by impregnating reinforcing fibers with the aforementioned varnish by a method such as RTM method of injecting the varnish to matching dies with fiber beds laid therein, and then baking and solidifying the prepregs in a large autoclave. In particular, since the epoxy resin of the present invention has low melt viscosity and excellent handleability, the epoxy resin is suitable for producing the fiber-reinforced resin molded article. Note that the fiber-reinforced resin molded article obtained in above contains reinforcing fibers and the cured product of the curable resin composition, and, specifically, the amount of the reinforcing fibers in the fiber-reinforced resin molded article is preferably in the range of 40 to 70 mass% and particularly preferably in the range of 50 to 70 mass% from the viewpoint of strength.

11. Others

Although the methods for producing the semiconductor sealing material, the fiber-reinforced composite material, etc., are described above, other cured products can also be produced from the curable resin composition. Other cured products can be produced according to typical curing methods for curable resin compositions. For example, the heating temperature conditions may be appropriately selected according to the type of the curing agent used in combination, usage, etc.

[Examples]

Hereinafter, the present invention is described specifically through Examples and Comparative Examples that do not limit the interpretation of the present invention. Furthermore, unless otherwise noted, the amounts are on a mass basis. The phenolic resins and the epoxy resins obtained in the description below and the cured products obtained by using the epoxy resins were measured and evaluated under the following conditions etc.

<Hydroxyl equivalent of phenolic resin>

The hydroxyl equivalent (g/Eq) of the phenolic resin was measured by the following procedure from the calculation equation below.

Into a 500 mL Erlenmeyer flask, 2.5 g of a phenolic resin obtained below as a sample, 7.5 g of triphenylphosphine, 7.5 g of pyridine, and 2.5 g of acetic anhydride were accurately weighed, the resulting mixture was treated at 120°C for 2.5 hours, and then the reaction was terminated by adding 5 mL of distilled water. The reaction product was then dissolved in 150 mL of tetrahydrofuran and 200 mL of propylene glycol monomethyl ether to prepare a sample solution.

Separately from this sample solution, 10 mL of distilled water and 2.5 g of acetic anhydride were accurately weighed, 10 g of pyridine was charged thereto, the resulting mixture was stirred for 10 minutes and left to stand still for 20 minutes, and then the resulting mixture was mixed with 150 mL of tetrahydrofuran and 200 mL of propylene glycol monomethyl ether to prepare a blank solution.

The obtained sample solution and the blank solution were titrated by using an automatic potentiometric titrator AT-510 (produced by KYOTO ELECTRONICS MANUFACTURING CO., LTD.) with a 0.5 mol/L ethanolic potassium hydroxide solution (titrant solution), and the hydroxyl equivalent was calculated from the equation below.

[Calculation equation for blank]

BL = (titration amount of blank solution) × (theoretical titration amount of 2.5 g of acetic anhydride)/(theoretical titration amount of blank solution)

= Y × [(2.5/102.09) × 2 × (1000/5)]/[(W/102.09) × 2 × (1000/5)]

BL: Blank value (mL)
Y: Titration amount of blank solution (mL)
W: Amount of acetic anhydride in blank measurement (g)

[Equation for calculating hydroxyl equivalent of sample]

Hydroxyl equivalent (g/Eq) = S × 1000/[{(BL × FA3/FA5) - EP1} × FA4]

S: Amount of sample (g)
FA3: Amount of acetic anhydride in sample measurement (g)
FA4: Concentration of volumetric solution (ethanolic KOH solution) (mol/L)
FA5: Amount of acetic anhydride in sample measurement (g)
EP1: Titration amount of sample (mL)

<Softening points of phenolic resin and epoxy resin>

The softening points (°C) of the phenolic resin and the epoxy resin obtained below were measured in accordance with JIS K 7234 (ring-and-ball method).

<Melt viscosity measurement (150°C)>

The melt viscosity (dPa·s) at 150°C was measured by using an ICI viscometer in accordance with ASTM D4287.

<Viscosity measurement (25°C)>

A type-E viscometer (TV-22 produced by Toki Sangyo Co., Ltd.) was used to measure the viscosity (mPa·s) at 25°C.

<Epoxy equivalent of epoxy resin>

The epoxy equivalent (g/Eq) of the epoxy resin obtained as below was measured in accordance with JIS K 7236.

<GPC measurement>

The phenolic resins obtained by a synthesis method described below and epoxy resins obtained by using these phenolic resins were subjected to GPC measurement by using the following measurement apparatuses under the following measurement conditions.

Measurement apparatus: "HLC-8320 GPC" produced by TOSOH CORPORATION

Columns: guard column "HXL-L" produced by TOSOH CORPORATION

+ "TSK-GEL G2000HXL" produced by TOSOH CORPORATION
+ "TSK-GEL G2000HXL" produced by TOSOH CORPORATION
+ "TSK-GEL G3000HXL" produced by TOSOH CORPORATION
+ "TSK-GEL G4000HXL" produced by TOSOH CORPORATION
Detector: RI (differential refractometer)
Data processing: "GPC Workstation EcoSEC-WorkStation" produced by TOSOH CORPORATION
Measurement condition: column temperature of 40°C
Developing solvent: tetrahydrofuran
Flow rate: 1.0 ml/minute
Standard: Monodisperse polystyrenes with known molecular weights were used in accordance with the measurement manual of "GPC Workstation EcoSEC-WorkStation".
(Polystyrenes used)
"A-500" produced by TOSOH CORPORATION
"A-1000" produced by TOSOH CORPORATION
"A-2500" produced by TOSOH CORPORATION
"A-5000" produced by TOSOH CORPORATION
"F-1" produced by TOSOH CORPORATION
"F-2" produced by TOSOH CORPORATION
"F-4" produced by TOSOH CORPORATION
"F-10" produced by TOSOH CORPORATION
"F-20" produced by TOSOH CORPORATION
"F-40" produced by TOSOH CORPORATION
"F-80" produced by TOSOH CORPORATION
"F-128" produced by TOSOH CORPORATION
Sample: prepared by filtering a tetrahydrofuran solution of 1.0 mass% of a phenolic resin and an epoxy resin on a solid content basis with a microfilter (50 μl).

Regarding the content ratio (area%) of the remaining (unreacted) phenolic compound in the phenolic resin, from the viewpoint of reducing the volatile components during curing and in order to avoid adverse effects on the bending properties of the cured product to be obtained, the content ratio of the remaining phenolic compound (remaining phenol) is preferably 1 area% or less, more preferably 0.5 area% or less, and yet more preferably 0.2 area% or less. In Examples, no remaining phenolic compound (residual phenol) was detected by GPC measurement.

<$^{13}$C-NMR measurement>

$^{13}$C-NMR: "JNM-ECA500" produced by JEOL Ltd.
Magnetic field strength: 500 MHz
Number of scan: 2000
Solvent: DMSO-d6 (phenolic resin), chloroform-d1 (epoxy resin)
Sample concentration: 30 mass%

From the results of the $^{13}$C-NMR charts, peaks of the target product (epoxy resin) could be confirmed, and synthesis of the target product of each reaction was confirmed. The results ($^{13}$C-NMR charts) of the $^{13}$C-NMR measurement are indicated in the drawings only for Example 1 and Example 5.

<FD-MS spectrum measurement>

FD-MS spectra were measured by using the following measurement apparatus under the following measurement conditions.

Measurement apparatus: JMS-T100GC AccuTOF produced by JEOL Ltd.
Measurement conditions
Measurement range: m/z = 4.00 to 2000.00
Rate of change: 51.2 mA/min
Final current value: 45 mA
Cathode voltage: -10 kV

Recording interval: 0.07 sec

From the results of the FD-MS spectra, peaks of the target products (phenolic resin and epoxy resin) could be confirmed, and synthesis of the target products was confirmed. The results of the FD-MS spectrum measurement are indicated in the drawings only for Example 1 and Example 5.

[Example 1]

[Synthesis of phenolic resin (a-1)]

Into a 2 L flask equipped with a thermometer, a condenser tube, and a stirrer, 310.4 g (3.30 mol) of phenol and 202.3 g (1.15 mol) of orthoxylylene dichloride were charged, and the resulting mixture was dissolved by heating to 100°C and retained thereat for 4 hours to carry out the reaction. The temperature was further elevated to 150°C and retained thereat for 2 hours to carry out the reaction. During this process, hydrochloric gas generated by the reaction was discharged out of the system and neutralized with an alkaline aqueous solution. After the reaction, unreacted phenol was distilled away at a reduced pressure to obtain 275.3 g of a phenolic resin (a-1) represented by general formula (4) below. The hydroxyl equivalent was 165 g/Eq, the softening point was 67°C, and the melt viscosity at 150°C was 0.6 dPa·s. The results of the GPC measurement found that the component corresponding to general formula (4) with p = 0 (dimer) accounted for 37 area%. The GPC chart is indicated in Fig. 1, the $^{13}C$-NMR spectrum is indicated in Fig. 2, and the MS spectrum is indicated in Fig. 3.

[Chem. 10]

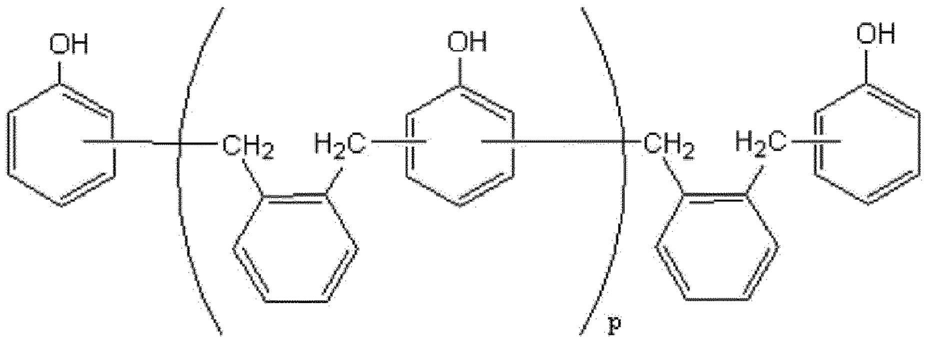

(4)

[Example 2]

[Synthesis of phenolic resin (a-2)]

Into a 2 L flask equipped with a thermometer, a condenser tube, and a stirrer, 846.9 g (9.00 mol) of phenol and 157.7 g (0.90 mol) of orthoxylylene dichloride were charged, and the resulting mixture was dissolved by heating to 100°C and retained thereat for 3 hours to carry out the reaction. The temperature was further elevated to 150°C and retained thereat for 1 hour to carry out the reaction. During this process, hydrochloric gas generated by the reaction was discharged out of the system and neutralized with an alkaline aqueous solution. After the reaction, unreacted phenol was distilled away at a reduced pressure to obtain 252.1 g of a phenolic resin (a-2) represented by general formula (5) below. The hydroxyl equivalent was 152 g/Eq, the softening point was 47°C, and the melt viscosity at 150°C was 0.2 dPa·s. The results of the GPC measurement found that the component corresponding to general formula (5) with p = 0 (dimer) accounted for 76 area%. The GPC chart is indicated in Fig. 4.

[Chem. 11]

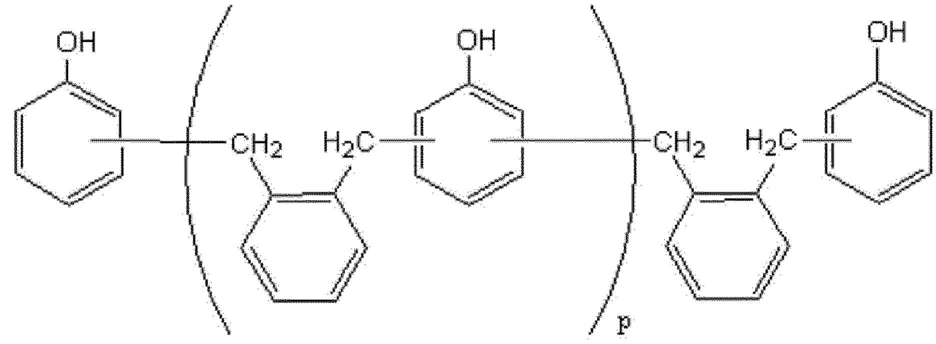

(5)

[Example 3]

[Synthesis of phenolic resin (a-3)]

Into a 2 L flask equipped with a thermometer, a condenser tube, and a stirrer, 283.4 g (3.01 mol) of phenol and 237.4 g (1.36 mol) of orthoxylylene dichloride were charged, and the resulting mixture was dissolved by heating to 120°C and retained thereat for 5 hours to carry out the reaction. The temperature was further elevated to 150°C and retained thereat for 5 hours to carry out the reaction. During this process, hydrochloric gas generated by the reaction was discharged out of the system and neutralized with an alkaline aqueous solution. After the reaction, unreacted phenol was distilled away at a reduced pressure to obtain 308.6 g of a phenolic resin (a-3) represented by general formula (6) below. The hydroxyl equivalent was 171 g/Eq, the softening point was 76°C, and the melt viscosity at 150°C was 1.3 dPa·s. The results of the GPC measurement found that the component corresponding to general formula (6) with p = 0 (dimer) accounted for 26 area%. The GPC chart is indicated in Fig. 5.

[Chem. 12]

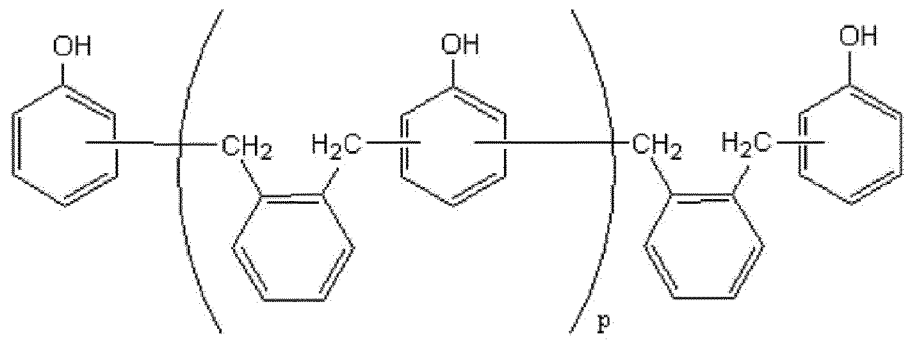

(6)

[Example 4]

[Synthesis of phenolic resin (a-4)]

Into a 2 L flask equipped with a thermometer, a condenser tube, and a stirrer, 270.3 g (2.50 mol) of ortho-cresol and 131.4 g (0.75 mol) of orthoxylylene dichloride were charged, and the resulting mixture was dissolved by heating to 140°C and retained thereat for 4 hours to carry out the reaction. The temperature was further elevated to 160°C and retained thereat for 2 hours to carry out the reaction. During this process, hydrochloric gas generated by the reaction was discharged out of the system and neutralized with an alkaline aqueous solution. After the reaction, unreacted phenol was distilled away at a reduced pressure to obtain 207.1 g of a phenolic resin (a-4) represented by general formula (7) below. The hydroxyl equivalent was 178 g/Eq, the softening point was 58°C, and the melt viscosity at 150°C was 0.3 dPa·s. The results of the GPC measurement found that the component corresponding to general formula (7) with p = 0 (dimer) accounted for 51 area%. The GPC chart is indicated in Fig. 6.

[Chem. 13]

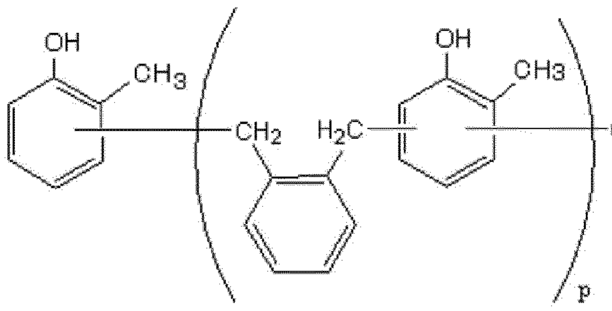

(7)

[Example 5]

[Synthesis of epoxy resin (A-1)]

Into a 2 L flask equipped with a thermometer, a condenser tube, and a stirrer, 240.0 g (1.45 mol as hydroxyl groups) of a phenolic resin (a-1), 672.7 g (7.27 mol) of epichlorohydrin, and 181.6 g of n-butanol were charged, and the resulting mixture was dissolved and heated to 50°C under stirring. Thereto, at a temperature of 50°C, 130.5 g (1.10 Eq relative to hydroxyl groups) of a 49% aqueous sodium hydroxide solution was added dropwise over a period of 3 hours, and then the reaction was further continued for 1 hour. After termination of the reaction, stirring was stopped, the water layer accumulated in the lower layer was removed, stirring was resumed, and unreacted epichlorohydrin was distilled away at a reduced pressure at 150°C. To the resulting crude epoxy resin, 546.5 g of methyl isobutyl ketone and 91.2 g of n-butanol were added to dissolve the crude epoxy resin. To the resulting solution, 13.9 g of a 10% aqueous sodium hydroxide solution was added, the reaction was carried out at 80°C for 2 hours, and then the resulting mixture was washed with 160.7 g of water until the pH of the washing solution was neutral. Next, the system was dehydrated by azeotropy, microfiltration was conducted, and the solvent was distilled away at a reduced pressure to obtain 305.4 g of a target epoxy resin (A-1). The epoxy equivalent of the obtained epoxy resin (A-1) was 234 g/Eq, and the epoxy resin (A-1) was semi-solid and had a melt viscosity at 150°C of 0.4 dPa·s. The GPC chart, the $^{13}$C-NMR spectrum, and the MS spectrum of the epoxy resin (A-1) are respectively indicated in Fig. 7, Fig. 8, and Fig. 9.

[Example 6]

[Synthesis of epoxy resin (A-2)]

Into a 2 L flask equipped with a thermometer, a condenser tube, and a stirrer, 214.0 g (1.41 mol as hydroxyl groups) of a phenolic resin (a-2), 520.9 g (5.63 mol) of epichlorohydrin, and 140.6 g of n-butanol were charged, and the resulting mixture was dissolved and heated to 50°C under stirring. Thereto, at a temperature of 50°C, 126.4 g (1.10 Eq relative to hydroxyl groups) of a 49% aqueous sodium hydroxide solution was added dropwise over a period of 3 hours, and then the reaction was further continued for 1 hour. After termination of the reaction, stirring was stopped, the water layer accumulated in the lower layer was removed, stirring was resumed, and unreacted epichlorohydrin was distilled away at a reduced pressure at 150°C. To the resulting crude epoxy resin, 497.8 g of methyl isobutyl ketone and 83.1 g of n-butanol were added to dissolve the crude epoxy resin. To the resulting solution, 14.4 g of a 10% aqueous sodium hydroxide solution was added, the reaction was carried out at 80°C for 2 hours, and then the resulting mixture was washed with 146.4 g of water until the pH of the washing solution was neutral. Next, the system was dehydrated by azeotropy, microfiltration was conducted, and the solvent was distilled away at a reduced pressure to obtain 281.1 g of a target epoxy resin (A-2). The epoxy equivalent of the obtained epoxy resin (A-2) was 221 g/Eq, and the epoxy resin (A-2) was liquid and had a viscosity at 25°C of 371000 mPa·s and a melt viscosity at 150°C of 0.1 dPa·s. The GPC chart of the epoxy resin (A-2) is indicated in Fig. 10.

[Example 7]

[Synthesis of epoxy resin (A-3)]

Into a 2 L flask equipped with a thermometer, a condenser tube, and a stirrer, 260.0 g (1.52 mol as hydroxyl groups) of a phenolic resin (a-3), 703.2 g (7.60 mol) of epichlorohydrin, and 189.9 g of n-butanol were charged, and the resulting mixture was dissolved and heated to 50°C under stirring. Thereto, at a temperature of 50°C, 142.7 g (1.15 Eq relative to hydroxyl groups) of a 49% aqueous sodium hydroxide solution was added dropwise over a period of 3 hours, and then the reaction was further continued for 1 hour. After termination of the reaction, stirring was stopped, the water layer accumulated in the lower layer was removed, stirring was resumed, and unreacted epichlorohydrin was distilled away at a reduced pressure at 150°C. To the resulting crude epoxy resin, 586.7 g of methyl isobutyl ketone and 97.9 g of n-butanol were added to dissolve the crude epoxy resin. To the resulting solution, 17.3 g of a 10% aqueous sodium hydroxide solution was added, the reaction was carried out at 80°C for 2 hours, and then the resulting mixture was washed with 172.6 g of water until the pH of the washing solution was neutral. Next, the system was dehydrated by azeotropy, microfiltration was conducted, and the solvent was distilled away at a reduced pressure to obtain 327.8 g of a target epoxy resin (A-3). The epoxy equivalent of the obtained epoxy resin (A-3) was 240 g/Eq, the softening point was 52°C, and the melt viscosity at 150°C was 0.7 dPa·s. The GPC chart of the epoxy resin (A-3) is indicated in Fig. 11.

[Example 8]

[Synthesis of epoxy resin (A-4)]

Into a 2 L flask equipped with a thermometer, a condenser tube, and a stirrer, 187.6 g (1.05 mol as hydroxyl groups) of a phenolic resin (a-4), 487.4 g (5.27 mol) of epichlorohydrin, and 131.6 g of n-butanol were charged, and the resulting mixture was dissolved and heated to 50°C under stirring. Thereto, at a temperature of 50°C, 94.5 g (1.10 Eq relative to hydroxyl groups) of a 49% aqueous sodium hydroxide solution was added dropwise over a period of 3 hours, and then the reaction was further continued for 1 hour. After termination of the reaction, stirring was stopped, the water layer accumulated in the lower layer was removed, stirring was resumed, and unreacted epichlorohydrin was distilled away at a reduced pressure at 150°C. To the resulting crude epoxy resin, 419.3 g of methyl isobutyl ketone and 70.0 g of n-butanol were added to dissolve the crude epoxy resin. To the resulting solution, 13.9 g of a 10% aqueous sodium hydroxide solution was added, the reaction was carried out at 80°C for 2 hours, and then the resulting mixture was washed with 123.3 g of water until the pH of the washing solution was neutral. Next, the system was dehydrated by azeotropy, microfiltration was conducted, and the solvent was distilled away at a reduced pressure to obtain 327.8 g of a target epoxy resin (A-4). The epoxy equivalent of the obtained epoxy resin (A-4) was 242 g/Eq, and the epoxy resin (A-1) was semi-solid and had a melt viscosity at 150°C of 0.3 dPa·s. The GPC chart of the epoxy resin (A-4) is indicated in Fig. 12.

[Comparative Example 1]

[Synthesis of phenolic resin (b-1)]

Into a 2 L flask equipped with a thermometer, a condenser tube, and a stirrer, 827.4 g (8.79 mol) of phenol and 154.1 g (0.88 mol) of paraxylylene dichloride were charged, and the resulting mixture was dissolved by heating to 100°C and retained thereat for 3 hours to carry out the reaction. The temperature was further elevated to 150°C and retained thereat for 1 hour to carry out the reaction. During this process, hydrochloric gas generated by the reaction was discharged out of the system and neutralized with an alkaline aqueous solution. After the reaction, unreacted phenol was distilled away at a reduced pressure to obtain 242.2 g of a phenolic resin (b-1). The hydroxyl equivalent was 152 g/Eq, the softening point could not be measured due to crystallization, and the melt viscosity at 150°C was 0.1 dPa·s. The GPC chart is indicated in Fig. 13.

[Comparative Example 2]

[Synthesis of phenolic resin (b-2)]

Into a 2 L flask equipped with a thermometer, a condenser tube, and a stirrer, 284.0 g (3.02 mol) of phenol and 216.8 g (1.24 mol) of paraxylylene dichloride were charged, and the resulting mixture was dissolved by heating to 100°C and retained thereat for 4 hours to carry out the reaction. The temperature was further elevated to 150°C and retained thereat for 3 hours to carry out the reaction. During this process, hydrochloric gas generated by the reaction was

discharged out of the system and neutralized with an alkaline aqueous solution. After the reaction, unreacted phenol was distilled away at a reduced pressure to obtain 279.4 g of a phenolic resin (b-2). The hydroxyl equivalent was 168 g/Eq, the softening point was 65°C, and the melt viscosity at 150°C was 1.1 dPa·s. The GPC chart is indicated in Fig. 14.

[Comparative Example 3]

[Synthesis of epoxy resin (B-1)]

Into a 2 L flask equipped with a thermometer, a condenser tube, and a stirrer, 204.0 g (1.34 mol as hydroxyl groups) of a phenolic resin (b-1), 496.6 g (5.37 mol) of epichlorohydrin, and 134.1 g of n-butanol were charged, and the resulting mixture was dissolved and heated to 50°C under stirring. Thereto, at a temperature of 50°C, 120.6 g (1.10 Eq relative to hydroxyl groups) of a 49% aqueous sodium hydroxide solution was added dropwise over a period of 3 hours, and then the reaction was further continued for 1 hour. After termination of the reaction, stirring was stopped, the water layer accumulated in the lower layer was removed, stirring was resumed, and unreacted epichlorohydrin was distilled away at a reduced pressure at 150°C. To the resulting crude epoxy resin, 474.6 g of methyl isobutyl ketone and 79.3 g of n-butanol were added to dissolve the crude epoxy resin. To the resulting solution, 5.4 g of a 10% aqueous sodium hydroxide solution was added, the reaction was carried out at 80°C for 2 hours, and then the resulting mixture was washed with 139.6 g of water until the pH of the washing solution was neutral. Next, the system was dehydrated by azeotropy, microfiltration was conducted, and the solvent was distilled away at a reduced pressure to obtain 268.4 g of a target epoxy resin (B-1). The epoxy equivalent of the obtained epoxy resin (B-1) was 218 g/Eq, and the epoxy resin (B-1) was liquid and had a viscosity at 25°C of 97000 mPa·s and a melt viscosity at 150°C of 0.1 dPa·s. The GPC chart of the epoxy resin (B-1) is indicated in Fig. 15.

[Comparative Example 4]

[Synthesis of epoxy resin (B-2)]

Into a 2 L flask equipped with a thermometer, a condenser tube, and a stirrer, 260.0 g (1.55 mol as hydroxyl groups) of a phenolic resin (b-2), 715.8 g (7.74 mol) of epichlorohydrin, and 193.3 g of n-butanol were charged, and the resulting mixture was dissolved and heated to 50°C under stirring. Thereto, at a temperature of 50°C, 145.3 g (1.15 Eq relative to hydroxyl groups) of a 49% aqueous sodium hydroxide solution was added dropwise over a period of 3 hours, and then the reaction was further continued for 1 hour. After termination of the reaction, stirring was stopped, the water layer accumulated in the lower layer was removed, stirring was resumed, and unreacted epichlorohydrin was distilled away at a reduced pressure at 150°C. To the resulting crude epoxy resin, 589.3 g of methyl isobutyl ketone and 98.4 g of n-butanol were added to dissolve the crude epoxy resin. To the resulting solution, 5.4 g of a 10% aqueous sodium hydroxide solution was added, the reaction was carried out at 80°C for 2 hours, and then the resulting mixture was washed with 173.3 g of water until the pH of the washing solution was neutral. Next, the system was dehydrated by azeotropy, microfiltration was conducted, and the solvent was distilled away at a reduced pressure to obtain 325.9 g of a target epoxy resin (B-2). The epoxy equivalent of the obtained epoxy resin (B-2) was 236 g/Eq, the softening point was 47°C, and the melt viscosity at 150°C was 0.8 dPa·s. The GPC chart of the epoxy resin (B-2) is indicated in Fig. 16.

[Comparative Example 5]

[Epoxy resin (B-3)]

A biphenyl aralkyl type epoxy resin (NC-3000 produced by Nippon Kayaku Co., Ltd., epoxy equivalent: 275 g/Eq, softening point: 57°C, viscosity at 150°C: 0.8 dPa·s) was used as an epoxy resin (B-3).

[Comparative Example 6]

[Epoxy resin (B-4)]

A dicyclopentadiene type epoxy resin (EPICLON HP-7200L produced by DIC Corporation, epoxy equivalent: 249 g/Eq, softening point: 56°C, viscosity at 150°C: 0.4 dPa·s) was used as an epoxy resin (B-4).

[Examples 9 to 12 and Comparative Examples 7 to 10]

Each epoxy resin composition was obtained by blending one of epoxy resins of Examples 5 to 8 and Comparative

Examples 4 to 6, and 4,4'-diaminodiphenylsulfone (4,4'-DDS) as a curing agent so that the epoxy equivalent/active hydrogen equivalent = 1/1, and then melting and mixing the resulting mixture at 100 to 120°C. Furthermore, the epoxy resin composition was poured into the gap between glass plates with 2 mm and 4 mm spacers therebetween, and heated at 150°C for 1 hour and then at 180°C for 3 hours to carry out the curing reaction and obtain a cured product.

<Glass transition temperature (Tg)>

The obtained cured product was cut into a piece 2 mm in thickness, 5 mm in width, and 20 mm in length, and used as a test specimen. The test specimen was analyzed with a dynamic mechanical analyzer (DMA: dynamic mechanical analyzer "DMS6100" produced by Hitachi High-Tech Group, deformation mode: both ends supported bending, measurement mode: sinusoidal vibration, frequency: 1 Hz, temperature elevation rate: 3°C/minute), and the temperature at which the change in elastic modulus was maximum (the rate of change in tanδ is the largest) was evaluated as the glass transition temperature (Tg) (°C).

The glass transition temperature (Tg) is preferably 130°C or higher and more preferably 150°C or higher. When the glass transition temperature is within this range, excellent heat resistance can be exhibited, which is useful.

<Measurement of bending strength, bending elastic modulus, and bending strain>

The obtained cured product was measured in accordance with JIS K 7171 to determine the bending strength, the bending elastic modulus, and the bending strain of a cured product having a thickness of 4 mm.

The bending elastic modulus is preferably 3300 MPa or more, more preferably 3400 MPa or more, and yet more preferably 3500 MPa or more.

The bending strength is preferably 130 MPa or more, more preferably 140 MPa or more, and yet more preferably 150 MPa or more.

The bending strain is preferably 4% or more, more preferably 4.5% or more, and yet more preferably 5% or more.

When the bending properties are within these ranges, excellent high bending properties can be exhibited, which is useful.

[Table 1]

| Substances blended and evaluation results | Unit | Examples | | | | Comparative Examples | | | |
|---|---|---|---|---|---|---|---|---|---|
| | | 9 | 10 | 11 | 12 | 7 | 8 | 9 | 10 |
| Epoxy resin (A-1) | g | 100 | | | | | | | |
| Epoxy resin (A-2) | g | | 100 | | | | | | |
| Epoxy resin (A-3) | g | | | 100 | | | | | |
| Epoxy resin (A-4) | g | | | | 100 | | | | |
| Epoxy resin (B-1) | g | | | | | 100 | | | |
| Epoxy resin (B-2) | g | | | | | | 100 | | |
| Epoxy resin (B-3) | g | | | | | | | 100 | |
| Epoxy resin (B-4) | g | | | | | | | | 100 |
| 4,4'-DDS | g | 26.5 | 28.1 | 25.8 | 25.6 | 28.4 | 26.3 | 22.5 | 24.9 |
| Glass transition temperature Tg (DMA) | °C | 170 | 152 | 177 | 174 | 167 | 181 | 169 | 178 |
| Bending elastic modulus | MPa | 3980 | 3840 | 3890 | 3870 | 3240 | 3200 | 2770 | 3390 |
| Bending strength | MPa | 173 | 151 | 161 | 155 | 142 | 141 | 127 | 114 |
| Bending strain | % | 7.7 | 5.0 | 5.6 | 5.2 | 12.4 | 10.0 | 12.3 | 3.7 |

The evaluation results in Table 1 above indicate that, in Examples 9 to 12, since the epoxy resins (A-1) to (A-4) obtained by using the desired phenolic resins (a-1) to (a-4) were used, cured products having heat resistance and high bending properties could be obtained.

Meanwhile, in Comparative Examples, although the heat resistance (glass transition temperature) was in some samples comparable or superior to Example, the bending elastic modulus and the bending strength tended to be low,

and thus Comparative Examples were inferior to Examples in attaining both the heat resistance and the high bending properties.

Brief Description of Drawings

[Fig. 1] Fig. 1 is a GPC chart of a phenolic resin (a-1) obtained in Example 1.
[Fig. 2] Fig. 2 is a $^{13}C$-NMR chart of the phenolic resin (a-1) obtained in Example 1.
[Fig. 3] Fig. 3 is a FD-MS spectrum chart of the phenolic resin (a-1) obtained in Example 1.
[Fig. 4] Fig. 4 is a GPC chart of a phenolic resin (a-1) obtained in Example 2.
[Fig. 5] Fig. 5 is a GPC chart of a phenolic resin (a-1) obtained in Example 3.
[Fig. 6] Fig. 6 is a GPC chart of a phenolic resin (a-1) obtained in Example 4.
[Fig. 7] Fig. 7 is a GPC chart of an epoxy resin (A-1) obtained in Example 5.
[Fig. 8] Fig. 8 is a $^{13}C$-NMR chart of the epoxy resin (A-1) obtained in Example 5.
[Fig. 9] Fig. 9 is a FD-MS spectrum chart of the epoxy resin (A-1) obtained in Example 5.
[Fig. 10] Fig. 10 is a GPC chart of an epoxy resin (A-2) obtained in Example 6.
[Fig. 11] Fig. 11 is a GPC chart of an epoxy resin (A-3) obtained in Example 7.
[Fig. 12] Fig. 12 is a GPC chart of an epoxy resin (A-4) obtained in Example 8.
[Fig. 13] Fig. 13 is a GPC chart of a phenolic resin (b-1) obtained in Comparative Example 1.
[Fig. 14] Fig. 14 is a GPC chart of a phenolic resin (b-2) obtained in Comparative Example 2.
[Fig. 15] Fig. 15 is a GPC chart of an epoxy resin (B-1) obtained in Comparative Example 3.
[Fig. 16] Fig. 16 is a GPC chart of an epoxy resin (B-2) obtained in Comparative Example 4.

**Claims**

1. A phenolic resin that is a reaction product of a phenolic compound and an orthoxylylene skeleton-containing compound, the phenolic resin comprising:
a phenolic skeleton derived from the phenolic compound and an orthoxylylene skeleton derived from the orthoxylylene skeleton-containing compound.

2. The phenolic resin according to Claim 1, wherein the phenolic resin is represented by general formula (1) below:

[Chem. 1]

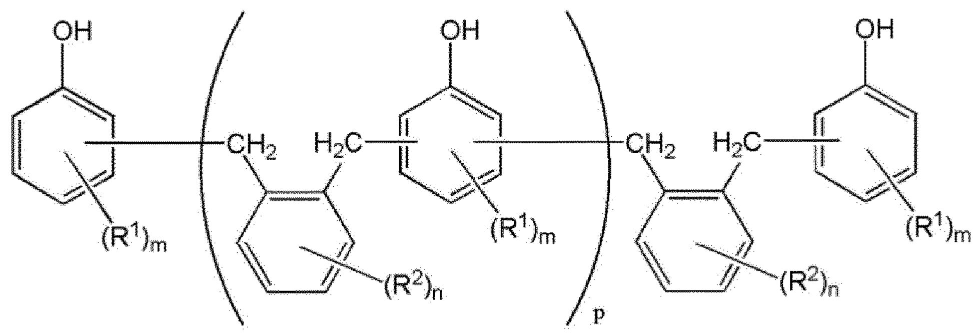

(1)

(In formula (1), $R^1$ represents a hydrogen atom, a hydrocarbon group having 1 to 4 carbon atoms, or an alkoxy group having 1 to 4 carbon atoms, $R^2$ represents a hydrogen atom or a methyl group, m represents an integer of 0 to 3, n represents an integer of 0 to 4, and p represents an integer of 0 to 50.)

3. An epoxy resin comprising a reaction product that has glycidyl ether groups formed by reaction between phenolic hydroxyl groups of the phenolic resin according to Claim 1 or 2, and epihalohydrin.

4. The epoxy resin according to Claim 3, wherein the epoxy resin is represented by general formula (2) below:

[Chem. 2]

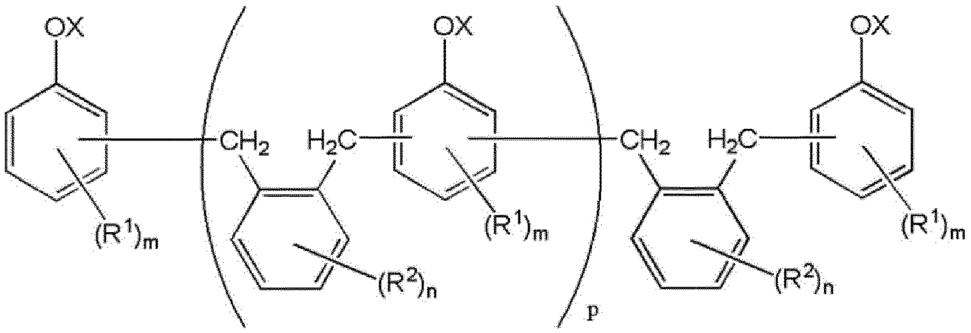

(2)

[Chem. 3]

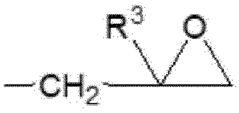

(3)

(In formula (2), X is represented by formula (3), $R^1$ represents a hydrogen atom, a hydrocarbon group having 1 to 4 carbon atoms, or an alkoxy group having 1 to 4 carbon atoms, $R^2$ represents a hydrogen atom or a methyl group, $R^3$ represents a hydrogen atom or a methyl group, m represents an integer of 0 to 3, n represents an integer of 0 to 4, and p represents an integer of 0 to 50.)

**5.** The epoxy resin according to Claim 3 or 4, wherein the epoxy resin has an epoxy equivalent of 200 to 300 g/Eq.

**6.** The epoxy resin according to any one of Claims 3 to 5, wherein the epoxy resin has a melt viscosity at 150°C of 2.0 dPa • s or less.

**7.** A curable resin composition comprising the epoxy resin according to any one of Claims 3 to 6.

**8.** A cured product obtained by curing the curable resin composition according to Claim 7.

**9.** A fiber-reinforced composite material comprising the curable resin composition according to Claim 7, and reinforcing fibers.

**10.** A fiber-reinforced resin molded article comprising the cured product according to Claim 8, and reinforcing fibers.

FIG. 1

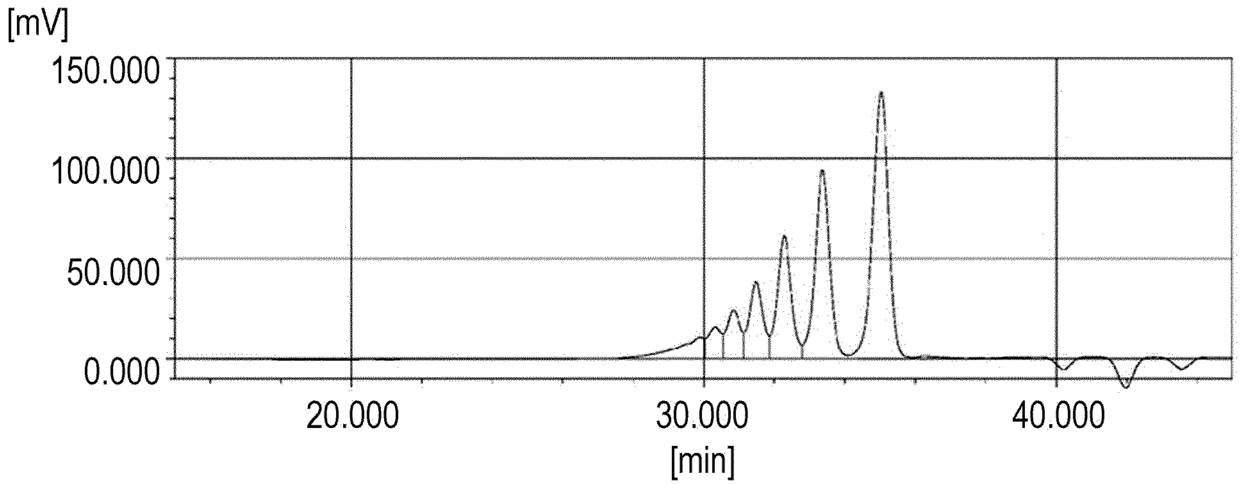

FIG. 2

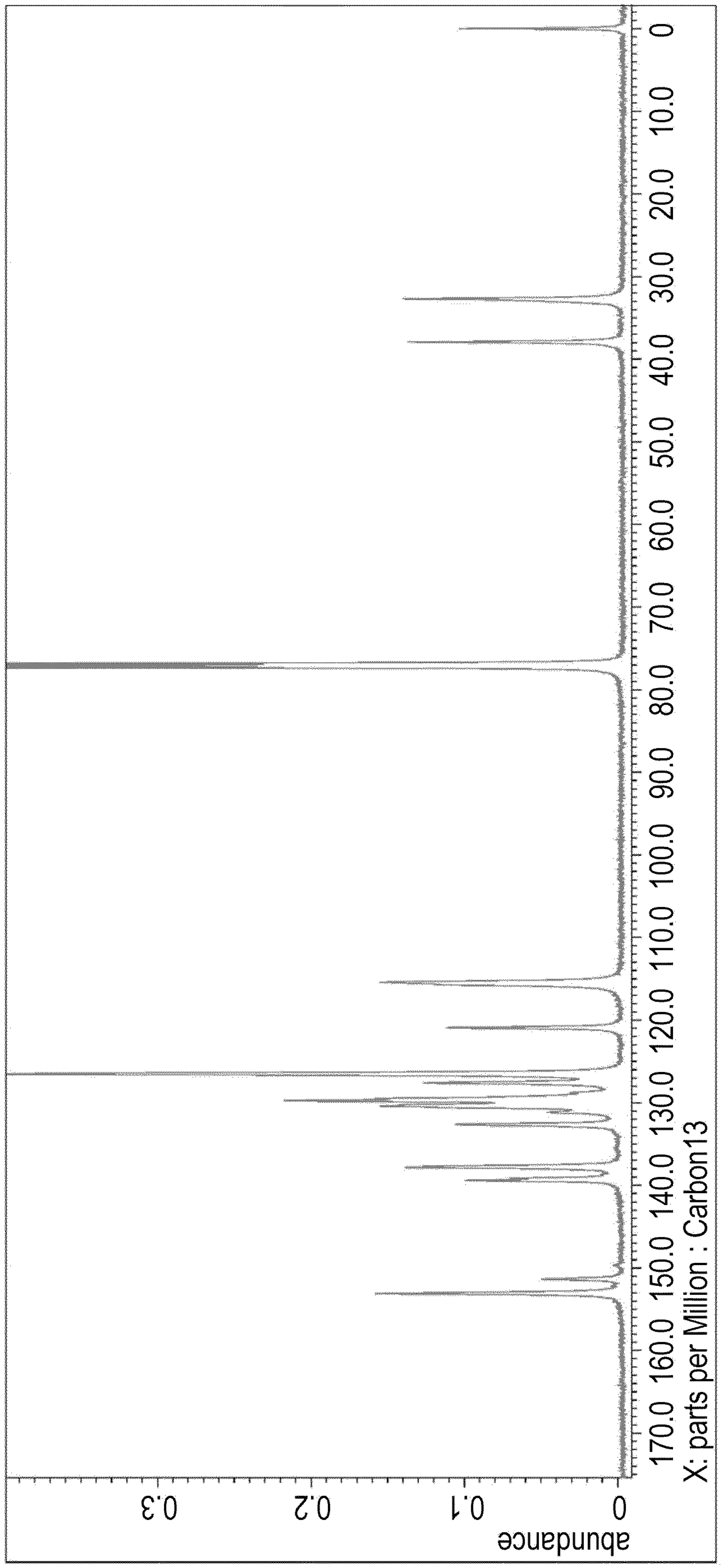

FIG. 3

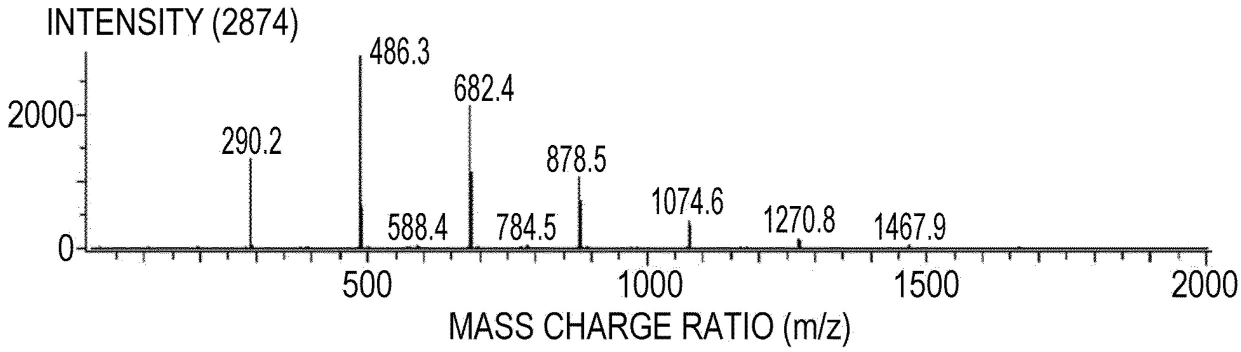


FIG. 4

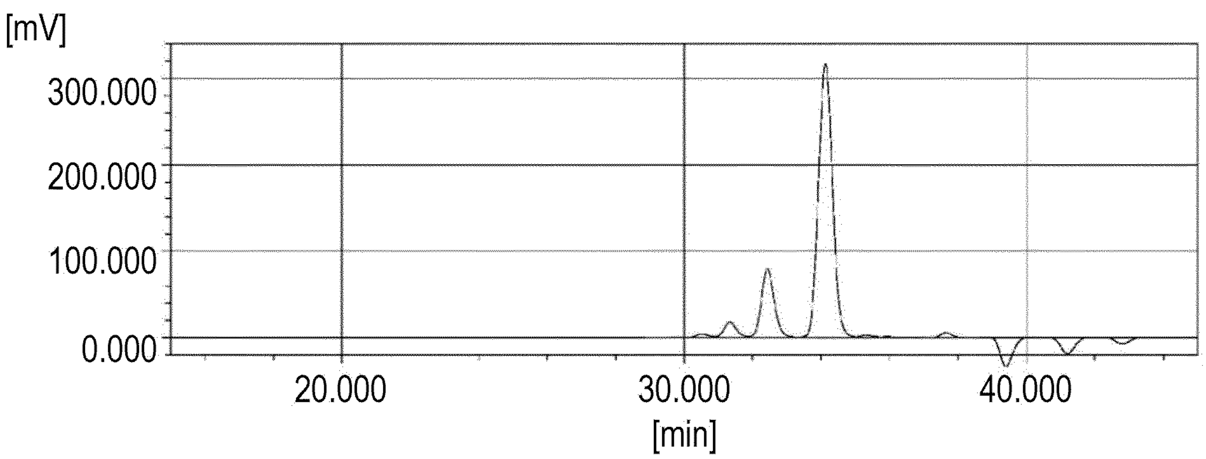


FIG. 5

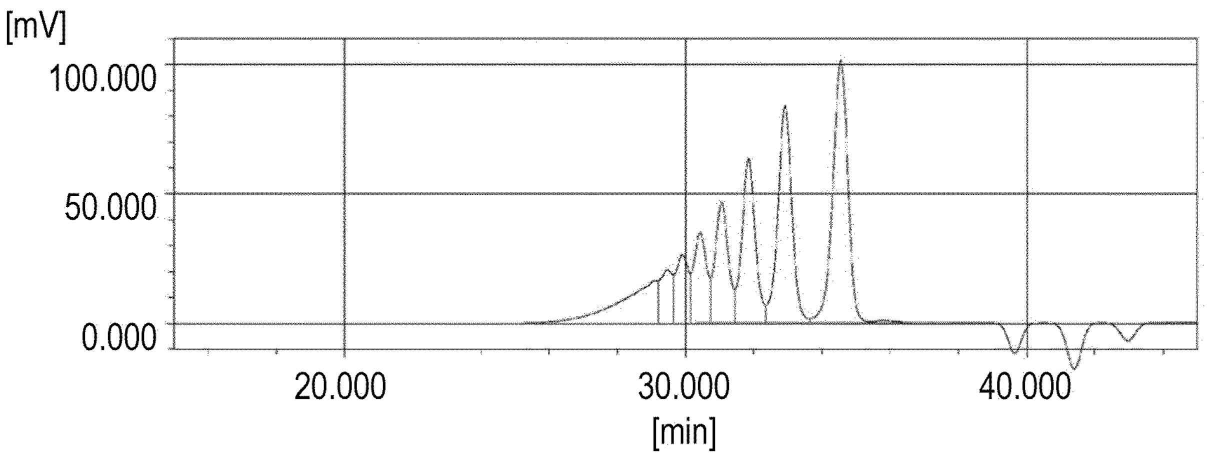

FIG. 6

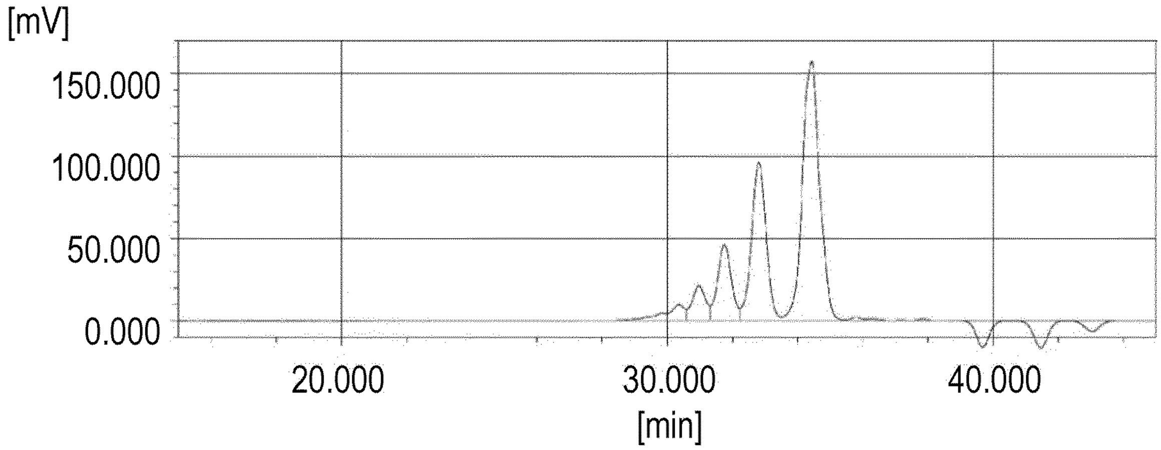
[mV]
150.000
100.000
50.000
0.000
20.000
30.000
40.000
[min]

FIG. 7

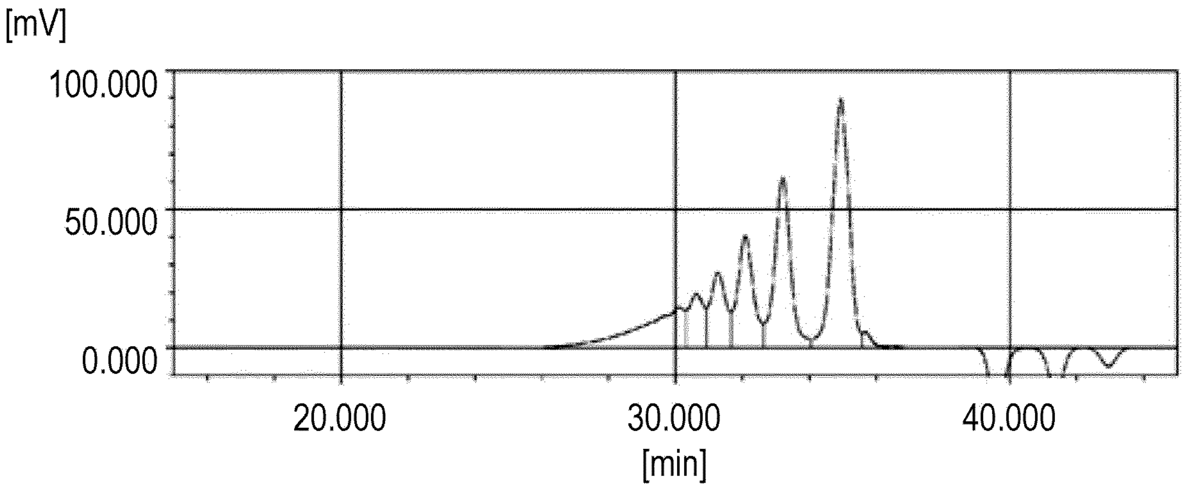
[mV]
100.000
50.000
0.000
20.000
30.000
40.000
[min]

FIG. 8

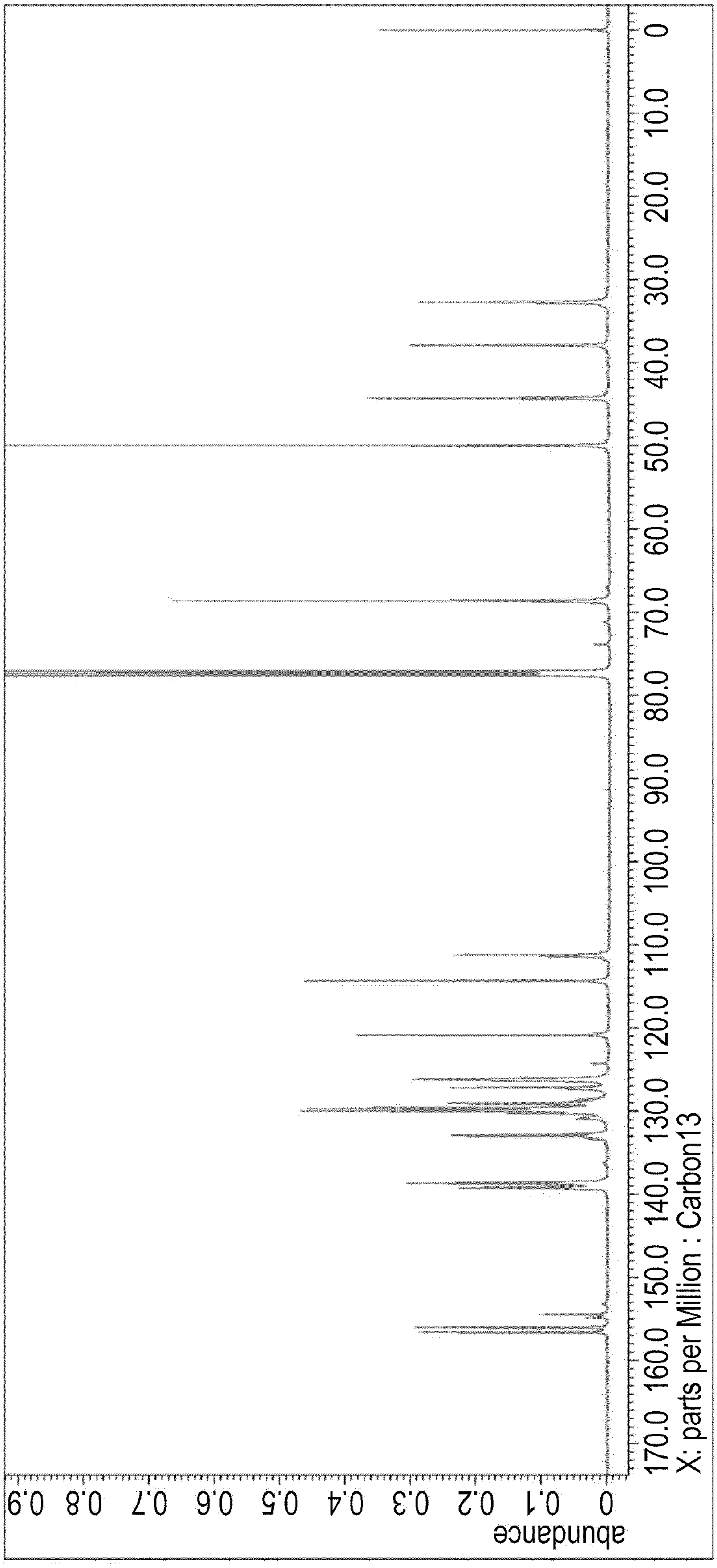
abundance
0
0.1
0.2
0.3
0.4
0.5
0.6
0.7
0.8
0.9
170.0 160.0 150.0 140.0 130.0 120.0 110.0 100.0 90.0 80.0 70.0 60.0 50.0 40.0 30.0 20.0 10.0 0
X: parts per Million : Carbon13

FIG. 9

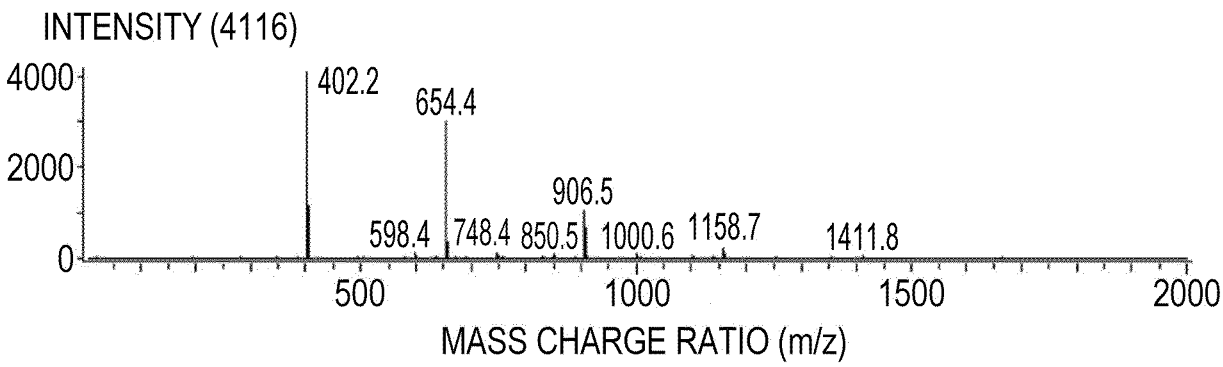


FIG. 10

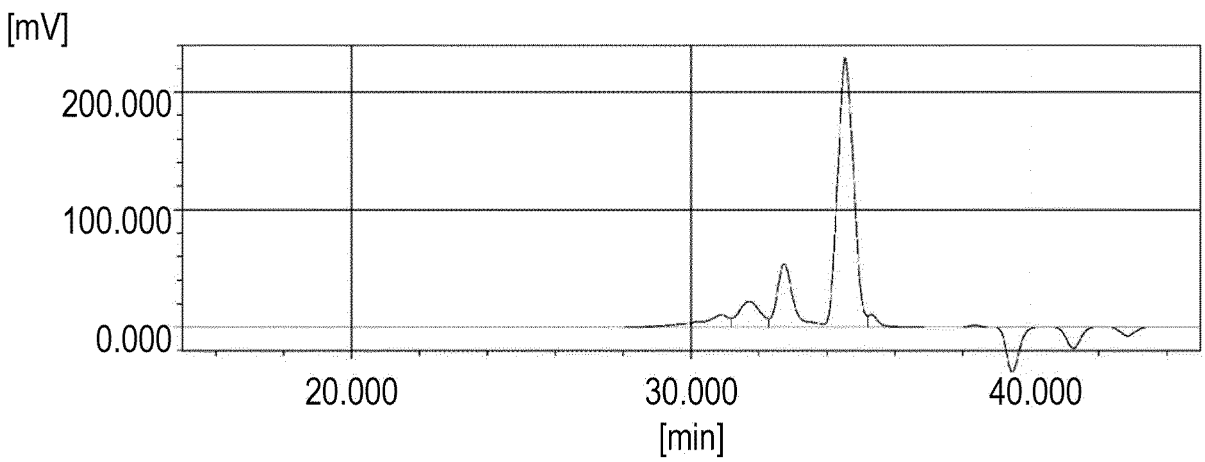


FIG. 11

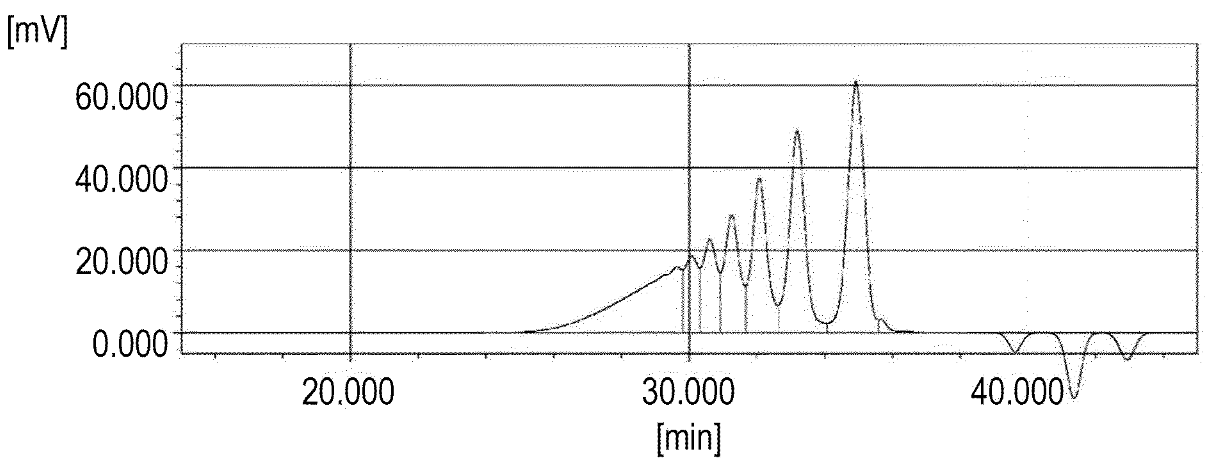

FIG. 12

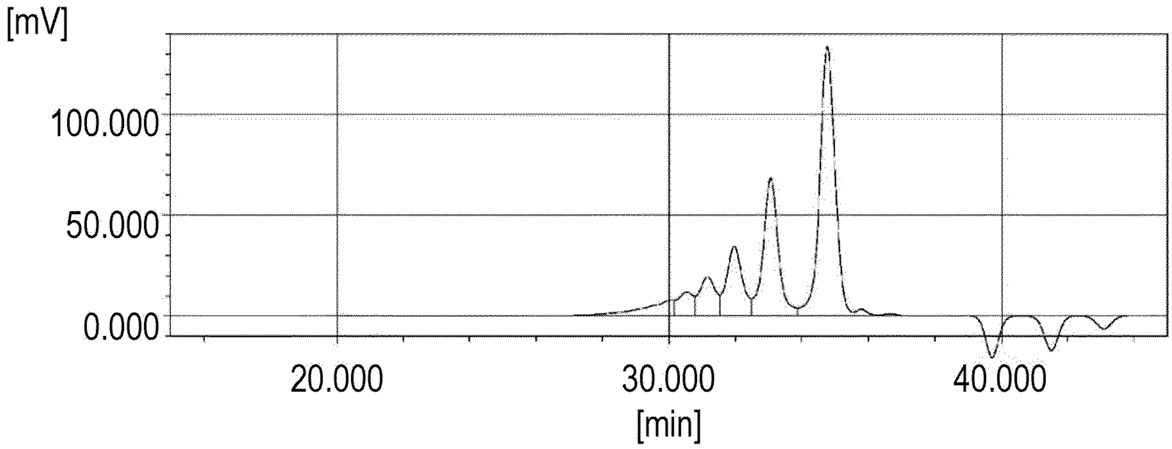


FIG. 13

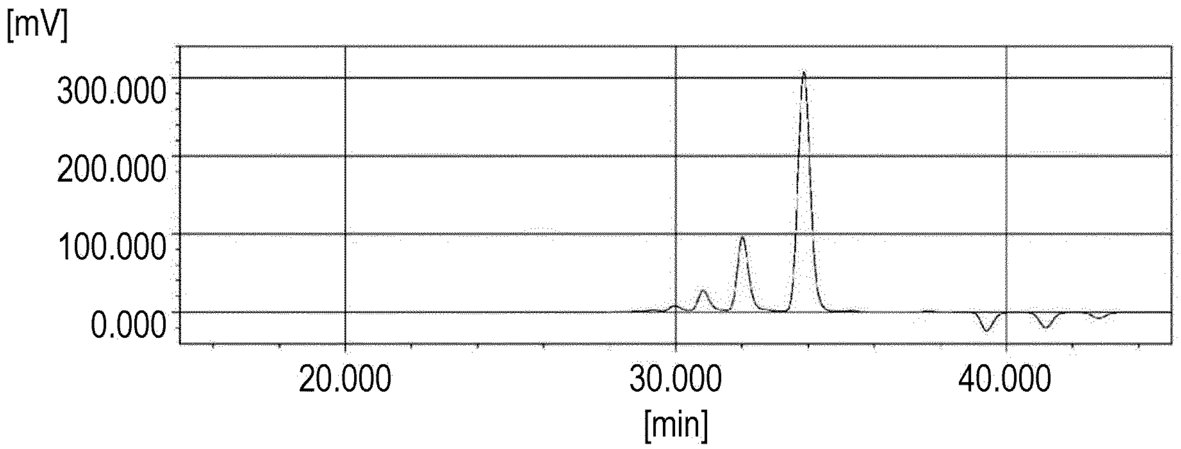


FIG. 14

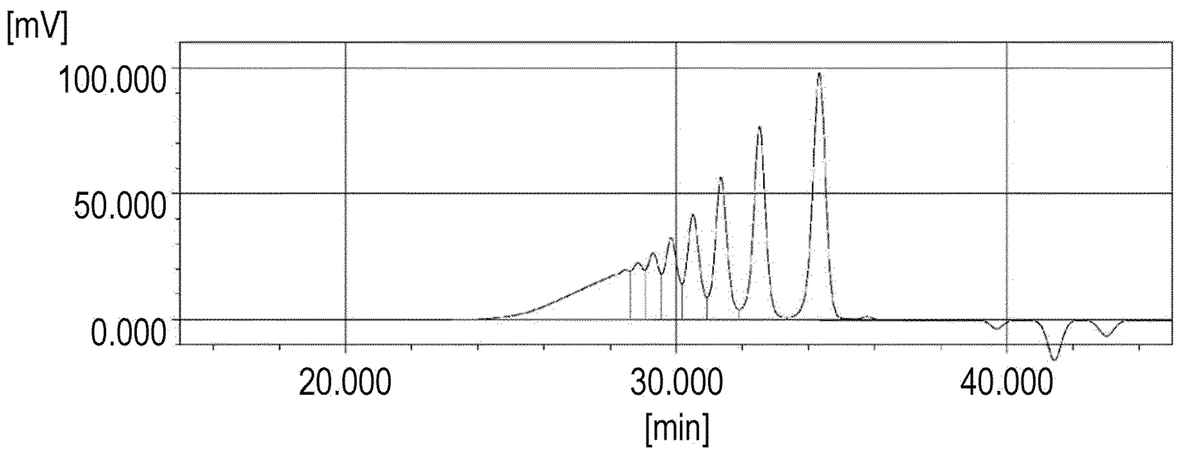

FIG. 15

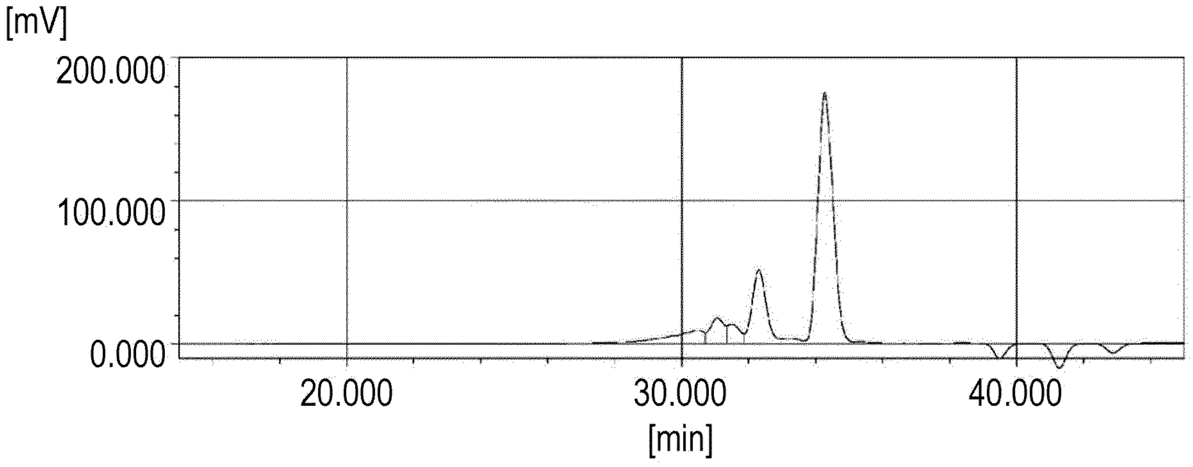
[mV]
200.000
100.000
0.000
20.000
30.000
40.000
[min]

FIG. 16

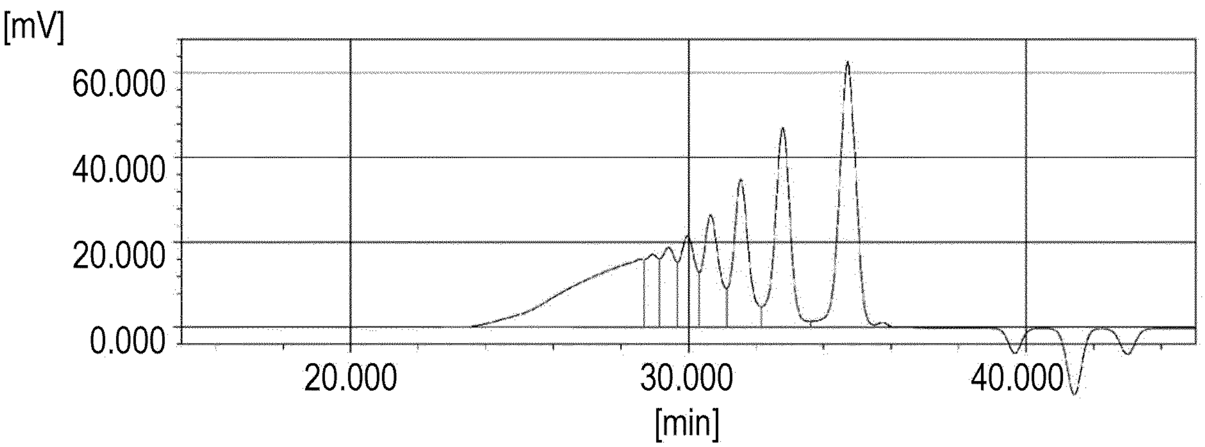
[mV]
60.000
40.000
20.000
0.000
20.000
30.000
40.000
[min]

**INTERNATIONAL SEARCH REPORT**

International application No.
**PCT/JP2022/035297**

**A. CLASSIFICATION OF SUBJECT MATTER**

***C08G 59/06***(2006.01)i; ***C08G 61/02***(2006.01)i; ***C08J 5/24***(2006.01)i
FI: C08G59/06; C08G61/02; C08J5/24 CFC

According to International Patent Classification (IPC) or to both national classification and IPC

**B. FIELDS SEARCHED**

Minimum documentation searched (classification system followed by classification symbols)

C08G59/06; C08G61/02; C08J5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 11-140167 A (MITSUI CHEMICALS, INC.) 25 May 1999 (1999-05-25) entire text | 1-10 |
| A | JP 2003-277485 A (JAPAN EPOXY RESIN K.K.) 02 October 2003 (2003-10-02) entire text | 1-10 |
| A | JP 2014-9336 A (NIPPON KAYAKU CO., LTD.) 20 January 2014 (2014-01-20) entire text | 1-10 |
| A | JP 2004-277717 A (MITSUI CHEMICALS, INC.) 07 October 2004 (2004-10-07) entire text | 1-10 |
| A | JP 2007-31638 A (UBE INDUSTRIES, LTD.) 08 February 2007 (2007-02-08) entire text | 1-10 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/035297**

| Patent document cited in search report | Publication date (day/month/year) | Patent family member(s) | Publication date (day/month/year) |
|---|---|---|---|
| JP 11-140167 A | 25 May 1999 | (Family: none) | |
| JP 2003-277485 A | 02 October 2003 | (Family: none) | |
| JP 2014-9336 A | 20 January 2014 | (Family: none) | |
| JP 2004-277717 A | 07 October 2004 | (Family: none) | |
| JP 2007-31638 A | 08 February 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003201388 A